# EUROPEAN PATENT SPECIFICATION

(11) **EP 3 586 341 B1**
(45) Date of publication and mention of the grant of the patent: **25.10.2023**
(21) Application number: 18758238.2
(22) Date of filing: 27.02.2018
(51) Int. Cl.: G21D 3/00, G21C 1/02, G21C 17/00, G06F 30/20, G06F 30/23, G21C 5/20

(54) **METHOD FOR MODELING A NUCLEAR REACTOR**
VERFAHREN ZUM MODELLIERUNG EINES KERNREAKTORS
PROCÉDÉ DE MODÉLISATION D'UN RÉACTEUR NUCLÉAIRE

(30) Priority: 27.02.2017 US 201762464254 P; 03.03.2017 US 201762466747 P
(43) Date of publication of application: 01.01.2020
(73) Proprietor: TerraPower, LLC, Bellevue, WA 98008 (US)
(72) Inventor: CHEATHAM, Jesse R., III, Bellevue, WA 98008 (US); PETROSKI, Robert C., Bellevue, WA 98008 (US); TOURAN, Nicholas W., Bellevue, WA 98008 (US); WHITMER, Charles, Bellevue, WA 98008 (US)
(74) Representative: D Young & Co LLP
(86) International application number: PCT/US2018/020027
(87) International publication number: WO 2018/157157

(56) References cited:
- JP-A- 2005 114 728
- US-A1- 2006 109 944
- US-A1- 2006 109 944
- US-A1- 2006 149 514
- US-A1- 2011 110 483
- US-A1- 2016 329 116
- ISHIDA S ET AL: "Finding the best fuel assemblies shuffling scheme of ADS for MA transmutation using Dynamic Programming", NUCLEAR ENGINEERING AND DESIGN, AMSTERDAM, NL, vol. 240, no. 10, 1 October 2010 (2010-10-01), pages 3645-3653, XP027355885, ISSN: 0029-5493 [retrieved on 2010-08-14]
- HOU JASON (JIA) ET AL: "3D in-core fuel management optimization for breed-and-burn reactors", PROGRESS IN NUCLEAR ENERGY, vol. 88, 29 December 2015 (2015-12-29), pages 58-74, XP029440659, ISSN: 0149-1970, DOI: 10.1016/J.PNUCENE.2015.12.002

## Description

### BACKGROUND

There are many systems for designing, simulating and/or monitoring a nuclear reactor. Many systems can perform various pieces of the analysis, but is appreciated that many of the tools are not integrated in a coherent way or provide speed, optimization, and/or fidelity to the level required for design and/or real time operations and control.

US 2006/0109944 discloses a method for establishing a nuclear reactor core loading pattern (LP) for fuel assemblies and burnable absorbers (BAs).

"Finding the best fuel assemblies shuffling scheme for ADS for MA transmutation using Dynamic Programming" by S. Ishida et al. discloses applying Dynamic Programming to find the best shuffling scheme of ADS, which consists of 54 fuel assemblies and a spallation target of Pb-Bi. The best scheme is successfully found under different constraints of power peaking factor.

"3D in-core fuel management optimization for breed-and-burn reactors" by J. Hou et al. explores the possibility of reducing the minimum required peak radiation damage by employment of 3-dimensional (3D) fuel shuffling that enables a significant reduction in the peak-to-average axial burnup, that is, more uniform fuel utilization.

### SUMMARY

It is appreciated that in some types of reactors, it may be advantageous to perform many movements of fuel assemblies within the reactor to ensure safe, efficient and in some cases also optimal core and/or fuel performance. Core and fuel performance can be indicated with any one or more (or combination) of parameters to maintain (power, flux, temperature, etc.) in amount and/or location as exceeding a threshold (or within multiple boundary conditions). It may be beneficial to move fuel between refueling operations such that burn-up of the fuel is optimized. Indeed, in one such reactor type, known in the art as a traveling wave reactor or TWR, it is appreciated that fuel may be moved in a series of shuffling operations within the reactor to ensure that fuel is placed in the reactor to be "bred up", and then burned in relation to a standing wave that exists within an operating core.

The TWR reactor is one type of a breed and burn reactor; however it is to be appreciated that although the below discussion is discussed with reference to a TWR reactor, the methodologies and techniques are applicable to any reactor type (breed and burn, LWR reactor, breeder, BWR reactor, etc.).

In a breed and burn reactor, fuel assemblies contain fissionable fuel, which can be bred up and burned in-situ. As used herein, fissionable fuel may include any fissile fuel and/or fertile fuel and may be mixed, combined or included within the interior volume of the fuel element with other suitable materials, including neutron absorbers, neutron poisons, neutronically transparent materials, etc. Fissile material may include any suitable material for nuclear fission or neutron flux production including uranium, plutonium and/or thorium. Fertile fuel may be any appropriate fertile fuel including natural uranium, depleted uranium, un-enriched uranium, spent LWR fuel, etc. which can be bred up to fissile fuel. The fissionable fuel can be bred up with excess neutrons in the reactor core and then burned, creating heat within the reactor core.

In one particular scenario, fuel located outside of a burn region may be slowly bred up in a convergent-divergent shuffling operation where fresh fertile fuel assemblies are inserted into the core in an outer breeding region, and in further fuel cycles are migrated in towards the core until the assemblies approach a jump ring. A jump ring is a determined spot in the core that transitions the movement of fuel from a breeding condition to a burning condition, and back out of the core again. When the assemblies approach the jump ring at a particular point in a fuel cycle, they are positioned near the center and diverge until they reach the jump ring again, where they jump to an outer periphery of the core, or become discharged from the core entirely (e.g., during a refueling operation).

Because the calculations to perform such shuffling operations are complex and number of fuel assemblies and their different states are numerous, prior fuel system would have pre-determined fuel movements for each fuel cycle and were not responsive to dynamic changes in reactor operation, fuel assembly state, etc. It would be beneficial to have a system that is capable of performing operations to model the reactor which in some cases determine optimal movements of fuel assemblies to optimize the burnup of fuel.

To this end, a system may be provided that is capable of modeling a reactor and the movement of fuel assemblies within the reactor. Such a system may be useful, for instance, to determine an optimal fuel shuffling scenario that meets certain criteria. Typically, such systems and the calculations performed are so complex and expensive that they are used to test initial designs responsive to a limited set of determined changes in a modeled environment. However, in the case of a TWR reactor and other reactors, there may be multiple moves of fuel assemblies between operations, it is appreciated that it would be desirable to continually model the real time and high fidelity model of the core operations and perform an optimization of such moves to achieve optimal burn of the fuel.

One aspect relates to a fuel handler module that is capable of modeling and testing a series of fuel management schemes. Such a module may be capable of performing multiple parallel fuel moves, and to determine an optimal set of moves over time that ensures burnup of the fuel such that the majority of viable fuel in each assembly is burned prior to its removal from the core. Such a module may work in connection with other modules that simulate effects of the moves within the modeled core. For instance, other modules may be provided that simulate neutronics, fuel performance, thermal-hydraulic, kinetic, mechanical, safety and economic parameters associated with the core, among others. According to one aspect, it may be desirable to have the ability to model a reactor and its fuel moves to optimize burn up while achieving criticality within thermal hydraulic limits. Such modeling may be performed, for example, by a specialized computer system that can efficiently model groups of moves over multiple fuel cycles including moving multiple fuel assemblies in each fuel cycle and modeling that over multiple fuel cycles separated by reactor operating time. In this way, the system may more effectively burn fuel by predicting optimal fuel group moves that allow the reactor to operate within specified operational constraints.

The system can determine characteristics of the types of fuel over their operation, including a classification of particular fuel as they exist in the reactor over time. For instance, at least one of the specific types of fuel includes at least one of a plurality of types of fuel including a feed type of fuel (e.g., fertile fuel that can be converted into fissile material by irradiation) and a driver type of fuel (e.g., fissile fuel that is capable of sustaining a fission reaction).

Although not fuel per se, fuel rods after burn up of fissile material may be typified and used as a neutron absorber. Driver fuel types may include an igniter type fuel (e.g., enriched uranium) that may be initially inserted in the core for igniting the burn wave or other reasons. Another driver fuel type may include a bred driver fuel, such as plutonium bred up from the fertile feed fuel. A fuel pin may include similar or different types of fuel within different locations within the fuel pin. Similarly, a fuel assembly may include the same or different fuel types in different fuel assemblies in different locations. The fuel types and locations of fuel (whether in the core, fuel assemblies, and/or in the fuel pins) may be simulated and tracked as they are repositioned within the reactor over a number of fuel cycles. The reactor core modeling system may also determine, for the plurality of fuel cycles of the nuclear reactor, the possible group moves based on the at least one of the plurality of types of fuel and a current location and/or distribution of power within the reactor.

The system may be used to determine optimal fuel moves that maintain criticality of the core within a specified range. For instance, it is appreciated that during the operation of the core, certain fuel moves may perturb the operation of the core and may affect its criticality. In a TWR reactor, for example, a burn region of the core may need to be maintained such that cascaded fuel moves do not interrupt the criticality of the core, necessitating a restart of the reactor, perhaps with more enriched fuel.

Further, in another instance, it may be desired to maintain a power region (e.g., in a TWR reactor, the location of a burn wave (e.g., a deflagration wave)) substantially within the same location, and move, add, or remove fissionable fuel in the core to maintain a substantially constant burn location. As noted above, the TWR reactor is a once-through reactor that uses in situ breeding. Breeding converts incoming subcritical reload fuel into new critical fuel, allowing a breed-burn wave to propagate. The concept works on the basis that breed-burn (deflagration) waves move relative to the fuel move. Thus either the fuel or the power may move relative to the stationary observer. In an early example, the burn wave moved relative to the fuel in a linear (candle-like) direction. In other early examples, the deflagration wave is initiated centrally and expands radially outward. Other embodiments of the TWR reactor involve moving the fuel while keeping the deflagration wave nuclear reactions in a substantially stationary burn region (sometimes referred to as the "standing wave"). In one desired scenario, the burn region is substantially stationary relative to the reactor vessel while fresh fuel is migrated around and then into the burn region. To achieve this standing wave and ensure criticality of the reactor while achieving optimal burn-up, a system that adequately models fuel changes and moves is necessary.

Such a system may receive actual operating parameters of a modeled core to determine the actual location of the standing wave responsive to a fuel move and/or group of cascading moves. Actual operating parameters that may be received include, for example, temperature, neutronics, fuel performance, burn up, burn-up history, burn up limits, reactivity (K-infinity of the assembly), power production, residence time, fuel wastage, design and/or safety limits of structures (e.g., degradation of cladding material), modeled fissile mass or other materials like poisons, criticality level, location of the standing wave, temperature history, coolant flow, coolant flow history, desired power distribution, reactivity, and reactivity feedback, among others. The system may monitor other parameters, such as a measure of criticality on the core, among others. Such information may be fed back into the model as inputs for further calculations of a future series of fuel moves. In one specific core implementation in a TWR reactor, the reactor-based model is subjected to potential fuel moves that maintain criticality, respect fuel performance limits and maintain a substantially stationary power distribution. Such a model may have a further requirement that it receives only fertile fuel during external refueling cycles after an initial startup period.

A specialized cluster-based computer system is provided capable of performing multiple parallel calculations relating to the modeled core. In one example implementation, multiple cascaded moves relating to a same core model are executed in parallel and scored relative to one or more desired parameters (e.g., criticality level, location of standing wave, operation within safety limits, etc.). A score is determined for each set of moves, and an optimal score is chosen as an actual set of moves that are executed on an operating reactor. The computer system may include multiple core processors that operate in parallel to more quickly evaluate the individual sets of cascaded fuel moves. In one embodiment, the score is a measure where a determination is made regarding how well the set of cascaded moves achieved the specified parameters. This measure may be used to select a particular set of moves. In another implementation, simulations that violate certain parameters (e.g., criticality not maintained, fuel assembly failure, etc.) are removed from consideration.

There may be a plurality of models that describe the core which are updated and simulated to determine the perturbations of the core responsive to fuel moves. Such models may include, for instance, GUI-based input models, hierarchical object models that describe hierarchical elements of the reactor core, deterministic models (such as DIF3D/REBUS), stochastic models (such as MCNPXT), graphics and visualization modules (such as XTView) among other types of models that may reflect the operation of the core in multiple dimensions. In one example the reactor core framework model may include an abstract model of the physical reactor, fuel assemblies, pins in the fuel assemblies and fuel within the fuel pins, a material library and thermal expansion data, history of location tracking for the fuel moves for each assembly, and a database storage of the results.

Additional models may be used as appropriate to describe or simulate the physics of the physical model. A neutronics model may include deterministic and/or stochastic models of neutronic activities based on the fuel locations, types, and state, fuel shuffling design and optimization module, a parallelized depletion solver, burnup dependent microscopic cross section manager, fission product modules, fuel cycle economics, pin-level flux reconstruction, reactivity effects of distortion. A thermal/hydraulics model including transient analysis, subchannel analysis, thermos analysis and/or orificing system for coolant flow. A fuel performance and/or core mechanical model may include fuel pin strain modelling and/or resulting fuel pin deformation (such as OXBOW). A transient analysis model which may include deterministic analysis of loss of coolant and or other events (such as SASSYS/SAS4A), reactivity coefficients, and/or determining control rod worth, shutdown, and/or control rod depletion.

According to the invention, it is provided a method for analyzing nuclear reactor data according to claim 1, with more specific implementation defined in the appended dependent claims.

### BRIEF DESCRIPTION OF DRAWINGS

Various aspects of at least one example are discussed below with reference to the accompanying figures, which are not intended to be drawn to scale. The figures are included to provide an illustration and a further understanding of the various aspects and examples, and are incorporated in and constitute a part of this specification, but are not intended as a definition of the limits of a particular example. The drawings, together with the remainder of the specification, serve to explain principles and operations of the described and claimed aspects and examples. In the figures, each identical or nearly identical component that is illustrated in various figures is represented by a like numeral. For purposes of clarity, not every component may be labeled in every figure. In the figures:
FIG. 1 shows a block diagram of a distributed computer system capable of implementing various aspects;
FIG. 2A shows an example process for performing modeling of a reactor;
FIG. 2B shows another example process for performing modeling of a reactor;
FIG. 2C shows an example branch search;
FIG. 3 shows a block diagram of a system capable of modeling and controlling a nuclear reactor;
FIG. 4 shows an example process for simulating and modeling a reactor in association with an operating reactor;
FIG. 5A shows an example core and fuel assemblies and example fuel movements;
FIG. 5B shows an example core and fuel assembly arrangement;
FIG. 5C shows an example core and fuel assembly arrangement;
FIG. 6 shows a conventional process for performing reactor simulation;
FIG. 7 shows a process for performing reactor simulation;
FIG. 8A shows a reactor core modeling system;
FIG. 8B shows example components of a reactor core modeling system;
FIG. 9 shows one implementation of a reactor core modeling system;
FIG. 10 shows an example modeling of a reactor;
FIGS. 11A-11B show an example simulation process;
FIGS. 12A-12B show one implementation of a reactor core modeling system;
FIG. 13 shows one example implementation of an interface stack;
FIG. 14 shows one example of interactions between simulation components;
FIG. 15 shows one example user interface of a cluster interface configured to implement a reactor core modeling system;
FIG. 16 shows one example user interface including simulation parameters and associated controls;
FIG. 17 shows another example interface;
FIGS. 18A-18B show an example interface including parameter and simulation control settings related to control rods;
FIGS. 19A-19B show another example user interface including simulation parameters and associated controls;
FIG. 20 shows an example interface including parameter and simulation control settings related to fuel management;
FIG. 21 shows an example interface that depicts core geometry including simulation parameters; and
FIG. 22 shows one implementation of a computer cluster.

### DETAILED DESCRIPTION

A system is provided that is capable of modeling and controlling a nuclear reactor. In particular, certain embodiments may relate to nuclear fission reactors, and apparatuses for controlling and modeling such types of reactors. However, it should be appreciated that other types of reactors may benefit by various embodiments, including fission reactors, fast fission reactors, breed and burn reactors, and in some cases a breed and burn reactor which creates a deflagration wave.

In one example, a nuclear fission reactor may include a fission deflagration wave reactor which includes a reactor core disposed within a reactor vessel. The reactor includes many different systems including monitoring and control systems that serve to monitor and control different aspects of the reactor operation. Different nuclear reactor types are well-known, such as those described in U.S. Patent Application Serial No. 14/284,542 entitled NUCLEAR FISSION REACTOR, A VENTED NUCLEAR FISSION MODULE, METHODS THEREFORE, AND A VENTED NUCLEAR FISSION FUEL MODULE SYSTEM filed May 22, 2014. Further, systems used to model such reactors can be used according to various embodiments, such as those described in U.S. Patent Application Serial No. 15/209,300 entitled ENHANCED NEUTRONICS SYSTEMS filed July 13, 2016.

In one such type of reactor referred to in the art as a traveling wave reactor (TWR), nuclear fission fuels such as uranium (e.g., natural, depleted, or enriched) fuel may be used. Other elements or isotopes may also be used. In one such reactor type, after an initial startup of the reactor using enriched uranium or other fissile fuel type, the primary fuel used to operate the reactor includes fertile fuel (such as depleted uranium, natural uranium, spent fuel, etc.) which may be produced as waste by commercial and other nuclear reactors. In this way, a nearly endless supply of fuel for such a reactor is available. Although the following description is written to describe an embodiment with depleted uranium, other types of fissionable material may be used as appropriate including either or both fissile and fertile materials.

Such fuel is typically assembled into fuel rods (sometimes called fuel pins) positioned within fuel assemblies that have some type of geometry, such as a rectangular or hexagonal geometry. The fuel assemblies are arranged in a geometrical arrangement to form a core. As is known, the core may include a number of different types of fuel assemblies having any appropriate combination of fissionable fuel of different types, amounts and level of enrichment, control rods, and/or neutron absorbers, among other elements. In one specific type of TWR reactor, a propagating burn front of a deflagration wave is created where neutron absorbers and/or neutron modifying structures (e.g., passive, active) may be arranged and/or moved to control the location, orientation, shape, speed and/or direction of movement of the burn front.

Fuel assemblies in a fission reactor need to reach, on average, a minimum burn-up level and need to maintain an equilibrium condition that meets physical (safety/design) considerations and/or reactor criticality. This can require the addition of fissionable fuel to the core or movement of existing fuel assemblies in the core. To place a new fuel assembly into the core of the TWR reactor or move a fuel assembly within the TWR reactor, additional open fuel assembly locations should be made available. Therefore, movement of a fuel assembly requires the removal or movement of at least one other assembly. The displaced assembly then needs to be placed in some other location which results in another assembly being moved to another core location. Therefore, it can be appreciated that in this particular scenario, the movement of one assembly can initiate a cascade of movements of assemblies within the core in a single fuel cycle. Such movements may be further complicated as multiple fuel assemblies are introduced and/or moved with each initiating a complex cascade of other fuel assembly movements. The fuel assembly moves may be further complicated if the movements are restricted in time and location to in-core moves during a point at which the reactor is between refueling cycles.

According to the invention, fuel management occurs within multiple fuel cycles. According to the invention, the method evaluates multiple moves ahead to determine the best overall fuel movement strategy. The restriction in time is related to how complicated (how many fuel management steps in advance) the system uses to design a specific fuel management operation for the desired objective. Objectives may include, for example, how to transition from a startup core to an equilibrium core with the least penalty in burnup, pressure drop, and/or other parameter(s), either alone or in combination.

A system is provided that evaluates sets of cascaded movements of fuel assemblies within the core and determines optimal movements based on existing core data, history of core and fuel assembly parameters, among other information. Because the complexity of the move decision grows with the number of moves and a number of move parameters to be specified and satisfied, a specialized system is needed to facilitate movement of fuel assemblies within a TWR reactor. The system is capable of evaluating multiple cascades of movements and comparing them to determine optimal fuel moves. Such fuel moves may then be executed by a fuel handler mechanism positioned within the core to effect the determined movements of assemblies to actual locations within the reactor core.

In traditional light water reactor (LWR) or other types of cores, many fuel assemblies are replaced (e.g., one third to one half every 18-24 months) during a refueling operation where the core is in a down operational state and the core is accessed externally to supply replacement fuel assemblies. In such cases, fuel is not typically "shuffled" or moved within the core between refueling operations. In a typical LWR, the fuel cycle is generally about three years. Because fuel is directly removed from the core and replaced with external fuel assemblies, assemblies are not displaced into other in-core locations, and a cascade of fuel assembly moves is not required in such conventional reactor systems. Further, in such systems, analysis is typically performed periodically during initial core design and during design changes, but because of their cost in time and complexity are not optimal and not generally used in core operation. It is appreciated that a system would be beneficial that is capable of determining optimal fuel movements that optimize burn up while achieving criticality within thermal hydraulic limits. The system is capable of determining optimal sets of fuel assembly moves, each set of moves having time separation between groups of moves over multiple fuel cycles. That is, the system determines optimal moves of multiple fuel assemblies in each fuel cycle and models these multiple move sets over multiple fuel cycles separated by reactor time. The system is capable of modeling different combinations of fuel moves from a start point in time (e.g., an initial time and state) to an end point, score those sequences of sets, and compare the sequences of sets to determine an optimal sequence of sets.

Because a system is provided that is capable of performing modeling of the reactor in any state or point in time, it is capable of performing lifetime analysis of the core relating to fuel moves or related to fuel burnup limits of any particular fuel assembly. Because TWR reactor and other long lifetime or fuel cycle reactors may allow the fuel to stay within the core for longer periods of time (e.g., 10 years or more), the physical limits of the fuel and fuel assembly components may be considered. Similarly, breed and burn reactors (including the TWR reactor) may consider fuel burnup and fuel conversion (from fertile to fissile) and breed and burn zone or burn front in the case of the TWR reactor, and associated thermal (temperature and/or neutronics) characteristics in determining which fuel assemblies to move, where to move those fuel assemblies, and when to move those fuel assemblies in any particular fuel shuffling maneuver analysis. Because a nuclear core may contain tens if not hundreds of fuel assemblies, the permutations of combination of which assemblies to move and where are very large.

Further, such a system may be used as a tool for implementing a fuel management strategy and to aid in the design and analysis of simulated reactors. The tool may also be used to understand, predict, and serve as the basis for implementing live fuel management for actual TWR operation.

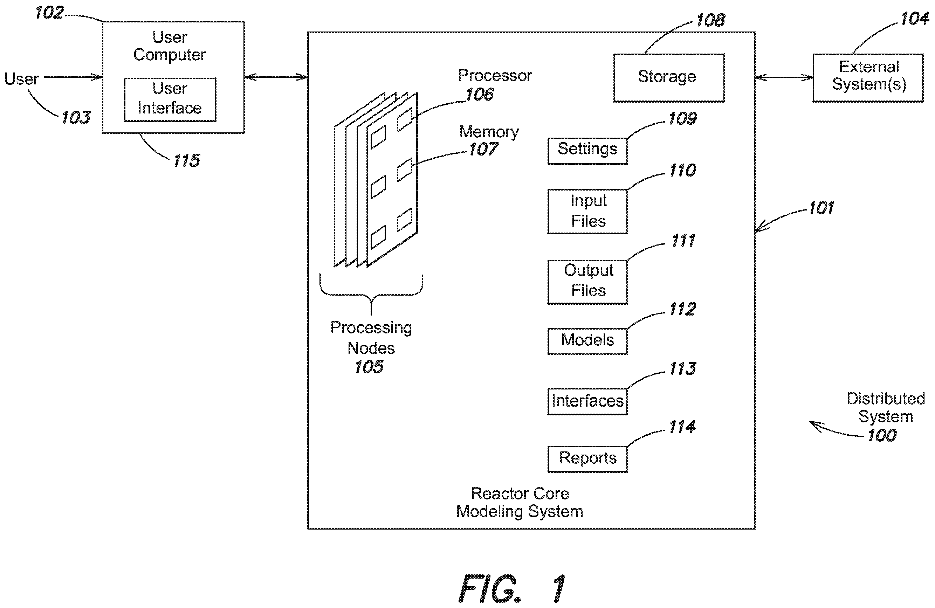

One such system for evaluating multiple cascaded fuel assembly moves is shown by way of example in Figure 1. In particular, Figure 1 shows a distributed system 100 according to one embodiment. A reactor core modeling system 101 may be provided which communicates to one or more user computers (e.g., user computer 102) operated by one or more users (e.g., user 103). User computer 102 may include one or more user interfaces (e.g., user interface 115) that receive and display information to the user relating to simulation and performance of a nuclear reactor.

System 101 may include, for example, one or more processing nodes 105, each of which may include one or more processors (e.g., processor 106), memory elements (e.g., memory 107), interfaces, network components, or other processing components. It is appreciated that computing resources that are necessary for modeling and simulating a nuclear reactor are extensive, and indeed many operations need to be performed in parallel to complete processing within an adequate amount of time.

To this end, one implementation of system 101 may include a cluster of processing nodes, each of which are capable of performing many simultaneous parallel operations. System 101 may also include other elements such as storage 108 (e.g., disk, storage arrays, or other storage devices). Storage 108 may store one or more elements that are used to model and simulate a nuclear reactor, including settings 109, input files 110, output files 111, models 112, interfaces 113, and reports 114, among other data elements. Notably, system 101 may include a component that performs branch searches for optimal fuel moves (herein termed a branch search calculator). The component may include hardware, software and combinations thereof that is capable of determining one or more optimal fuel assembly moves.

Further, system 101 maybe capable of communicating with one or more external systems 104 for the purpose of performing parts of the simulation, providing results of the simulation, performing indications or control actions with an operating nuclear power plant, or other related input/output functions.

System 101 may include a high-performance cluster of nodes, including hundreds or thousands of core processors, each including storage and memory connected by a high-performance network connection. For instance, an example node may include 48GB of RAM, a 500GB hard disk, an InfiniBand network connection (e.g., a 40 Gigabit rate), and one or more core processors (e.g., 12 Xeon cores). Such nodes may be connected together in a cluster (e.g., an HPC type cluster) which provides computing power in the Teraflops range. However, it should be appreciated that other types and configurations of a distributed computer system may be used.

The system may integrate many models from a single input, and may tie together a number of external computing systems and associated codes that provide simulation of various aspects of the reactor. The system may provide a single interface to the user and may allow for simpler and timelier modeling of the reactor which can be used to model and simulate the reactor and its fuel moves.

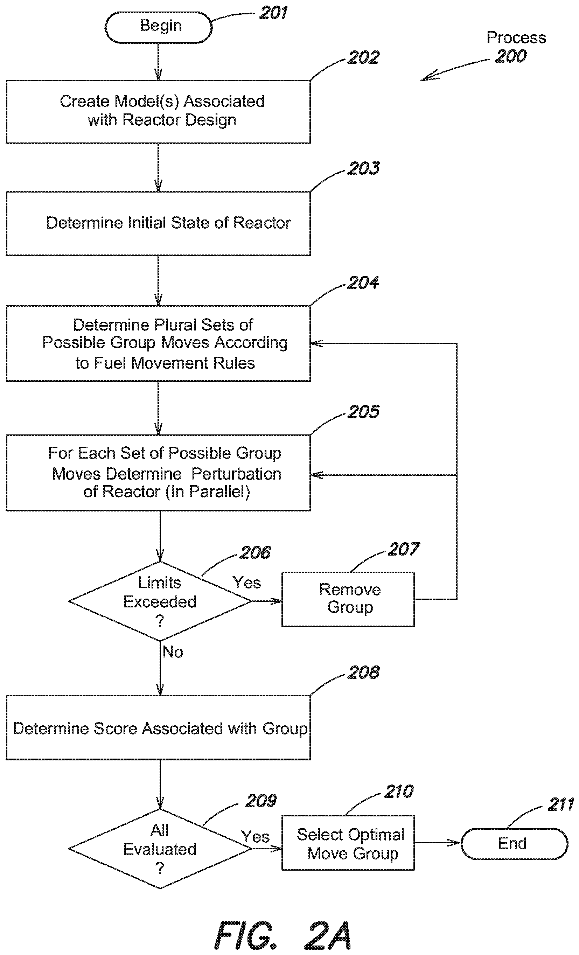

Figures 2A-2B show an example process 200 for modeling a reactor system. At block 201, process 200 begins. At block 202, a model is created associated with a particular reactor design. For instance, such a model may be created using one or more tools provided by the system (e.g., system 101). In one example, the user may create a reactor design using one or more elemental models. For example, the reactor model may be a hierarchical description of reactor elements as described further below. Such models may be created and stored within storage of system 101.

At block 203, the system may determine an initial state of the reactor at Beginning of Life (BoL) based on the model design, fuel assemblies, neutronics, control structures, etc. In general, the system determines a BoL of each of the fuel elements and then each fuel element will go through multiple fuel cycle shuffles and then be retired out of the core. At block 204, the system selects a candidate group of one or more fuel assemblies, and for that selected group of fuel assemblies, determines a plurality of sets of possible group moves according to one or more for fuel movement rules and system level constraints. For instance, it may be desired to slowly breed up fuel assemblies having depleted fuel towards the center of the reactor (e.g., towards the deflagration wave) until they achieve a particular enrichment level.

At BoL, a typical core has an initial igniter in the center to trigger a deflagration wave and then fuel is bred just outside of that region. The igniter is removed and the bred up fuel is moved inward to maintain the 'wave' in a standing position. Basically, the wave moves relative to the fuel, but the fuel is physically moved inward to maintain the position of the wave substantially in one place which may simplify coolant flow. A more detailed explanation of fuel movement is described and shown in U.S. Patent No. 8,942,338 entitled "Traveling wave nuclear fission reactor, fuel assembly, and method of controlling burnup therein". Further, U.S. Patent Application entitled "Movement of Materials in a Nuclear Reactor" describes possible fuel movements and fuel cycle shuffling. Further, U.S. Patent Application 12/925,985 entitled "Standing wave nuclear fission reactor and methods" describes shuffling fuel to maintain burn front in one region of core and moving fuel into and out of that region to maintain burn region as stationary relative to core, but moving with respect to fuel.

The system uses a branch search algorithm to determine which fuel assemblies to select, move and optimize the selection and movement of fuel assemblies to meet different criteria. Specifically, the system maximizes (without exceeding) burnup of an individual fuel assembly, while maintaining criticality above one (1) within the burn region such as the burn front of a deflagration wave, and this may be optimized efficiently by the system over multiple fuel cycles. The system may also take into account fuel moves that do not exceed critical parameters (e.g., of the reactor, physical and other types of constraints for fuel assemblies, etc.). Although a branch search may be implemented, any optimization algorithm (e.g., a heuristic search algorithm such as a Monte Carlo tree search (MCTS)) may be used to determine optimal fuel movements.

For instance, Monte Carlo searches are generally used in gaming (e.g., poker) to determine optimal game plays. As MCTS is conventionally used in games, there are multiple playouts of moves, and random samples of moves are played to determine outcomes which are then used to weight moves that lead to victorious outcomes.

As a search algorithm such as MCTS or other is applied to nuclear reactor theory, selected groups of fuel assemblies and groups of moves of those fuel assemblies are evaluated to determine outcomes of a nuclear reactor over one or more fuel cycles. The outcomes are results of simulations of the reactor responsive to the different groups of fuel moves, and an evaluation of certain parameters relating to the reactor. Although random sampling of possible fuel moves can occur, the permutations of possible fuel moves may be influenced by heuristic information relating to the types of fuel moves that permitted and/or desired.

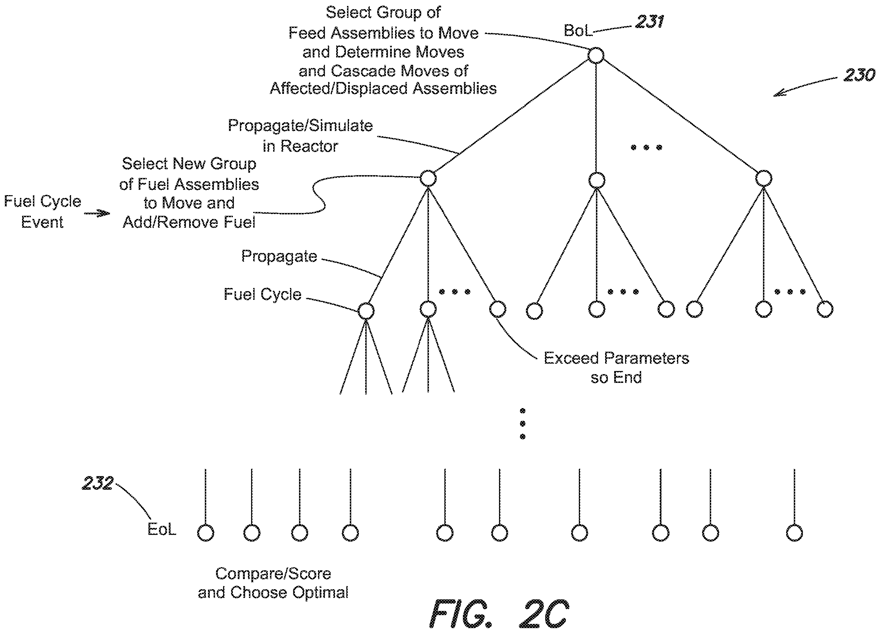

The path may be defined in the search algorithm as the state transition from Beginning of Life (BoL) to a final state of the reactor or some other state such as an external refueling operation as shown in more detail in Figure 2C which shows a branch search and simulation. Nodes along the path may be defined as fuel cycles and the fuel moves that are performed at each cycle. These moves are a defined as a group of cascaded moves within the reactor. At each cycle, the results of each group of moves may be simulated over time to the next anticipated or determined fuel move by the reactor core modeling system, and outcomes of reactor parameters (e.g., evaluation of K-effective of the core, power distribution, and reactivity swing, burnup of assemblies, among other factors mentioned above) may be evaluated (e.g., at fuel cycles, over a series of fuel cycles, end of life, etc.). At BoL (or other reactor state such as a fuel cycle), a group of fuel assemblies may be selected to move and cascade moves of affected (e.g., displaced) assemblies are simulated. Branches that result in an undesirable state (e.g., operational parameters out of acceptable range, reactor in an undesirable state, safety parameters exceeded, etc.) may be eliminated from consideration (e.g., dead-ended).The reactor is simulated over time to a next state (e.g., a fuel cycle) where another group of fuel assemblies can be selected, moved and simulated until the next cycle (or End Of Life (EoL) 232).

The system is configured to determine results N cycles in from a particular state. It should be appreciated that the deeper the search in the tree, the larger the scope of the problem that is being solved.

There may be practical limitations (e.g., time, computational cycles) for a particular design iteration. The system may be configured to calculate the future state directly on a N cycle fuel path or estimate future state using a simplified surrogate model to make decisions. As can be appreciated, a number of different "outcomes" based on one or a plurality of reactor parameters of fuel group moves can be evaluated or scored such as fuel performance, burnup / burnup limits, reactivity (the K-infinity of the assembly, assuming the assembly is in an infinite repeated lattice), power production, residence time, fuel wastage (degradation of cladding material), modeled fissile mass (or other materials like poisons), and location.

Although fuel assemblies may be moved based on fuel performance, the fuel, according to one embodiment, is required to end up with a reactor core that is critical (e.g., with a specified k_{eff}) and that fits into thermal hydraulic limits that are specified. In one embodiment, global objectives or outcomes may be part of the selection process along with individual assembly information that eliminates certain group moves (e.g., certain fuel moves that have acceptable assembly burnup may not be permitted if it causes the reactor to have a value of k_{eff} that is too low). Certain parameters may have particular measures (e.g., good, bad, acceptable, not acceptable, etc.), and may be evaluated for the reactor overall as well as independent elements of the reactor (e.g., a particular fuel assembly). For instance, power distribution of the core of a particular set of moves may be compared to an equilibrium power distribution which may be compared with a 12 norm. As is known, coolant is required to remove power from the core, so power and coolant flow rates are related. Namely, Qdot (rate of heat removal) = mdot(mass per second)*heat capacity*change of temperature.

An equilibrium fuel management scheme may be determined. That is, after one cycle, a fuel management scheme is performed (e.g., removing burned assemblies, putting in fresh assemblies) and the system creates the beginning of cycle conditions that resulted from the last cycle. In other words, the system keeps recreating the same conditions over and over (power distribution, K-effective swing) by doing the same fuel management operation.

By evaluating physical parameters from a simulation over cycles, each set of moves may provide a unique score that may be weighted, and may be in a spectrum of good/bad. In an additional or alternative score, a value of K-effective of the core after the simulated fuel moves may be determined and, if it is below 1.0 or does not exceed a criticality threshold )a K-effective greater than N), the score may be 0 and/or that particular set of moves may be removed from consideration. Combinations of binary (yes/no or 0/1) results and direct scores can be evaluated, and no go scenarios discarded and all 'go' scenarios compared to find the most suitable scores to find the most suitable for that cycle or series of fuel cycles. Further, fuel breed and/or burnup can be determined and if breeding does not meet a desired threshold and/or burnup exceeds fuel limits or a burnup threshold, then that branch group of moves may be removed from the search. These parameters are then combined (e.g., in a logic statement) with some fuel moves being go/no-go options (e.g., a less than 1.0 value of K-eff, and flow rates compared to equilibrium and previous fuel management options up to this point trying to mimic equilibrium, etc.). Because multiple parameters may cause a particular candidate solution of fuel moves to fail to meet system requirements, the combination provides a better result than just a comparison to equilibrium alone or evaluation of individual values. Certain failing candidates may be removed from consideration, and the remainder may be further evaluated over the simulation timeline and optimization scored and compared to determine the optimal set.

A certain set of moves may result in the reactor being critical or subcritical. If the core is critical, the system multiplies the score by 1.0. If the core is subcritical, the system multiplies the score by 0.0, removing the corresponding set of moves from possibly being selected. The fuel management scheme chosen when the reactor is not in equilibrium mode (but trying to get to it), closely resembles power distribution at equilibrium (e.g., least squares comparison of total power of each individual assembly compared to equilibrium mode). The system can use this number to assess how good one shuffle pattern is compared to another in replicating power distributions, and this number may be used as a component in the overall score.

In general, the system selects and evaluates several possible fuel cycles and shuffles, and then selects the series of fuel cycles and shuffles that best meet the selected criteria. As discussed, there may be any number of predetermined criteria that may be used to restrict selection or movement of any fuel assembly. For instance, restrictions may be placed on the movement of certain fuel assemblies within the core based on, for example, one or more fuel assembly parameters including the type of fuel, enrichment level, conversion ratio, burnup history, location of a standing wave, among other parameters. A number of classifications may be determined for particular assemblies based on their parameters, and fuel movement rules may be used to restrict possible movements of different types of assemblies. In relation to the branch or Monte Carlo tree search (or other optimization), such restrictions may serve to eliminate certain configurations, improving the performance of the search, and reducing the number of simulations.

As discussed, knowledge of certain acceptable or recommended moves may be used to restrict or limit the number of possible fuel moves. For example, a driver-type fuel assembly management scheme may be determined that is convergent, wherein fissile assemblies (which at BoL may include enriched fuel) are charged into a particular ring (e.g., in the case of a circular core design), marched towards the center of the core, and discharge from a central region of the core as the fuel assemblies reach high burn up. These driver assemblies may remain in the core for a number of cycles (e.g., three cycles). The driver assemblies may lose reactivity as they burn, and rather than discharging from the center of the core, the burned fuel assembly may be later placed on the outer region of the core to reduce radial power peaking. It should be appreciated that different fuel management strategies may be used and evaluated by the system as being better or worse than others at any particular point in time. According to one embodiment, certain fuel moves are eliminated as possibilities of the branch search due to heuristic knowledge of certain acceptable moves and/or combinations of moves.

A feed fuel assembly type management scheme can be implemented and is referred to herein as convergent-divergent, wherein several feed fuel assemblies march from a periphery of the core towards the center during each fuel cycle (convergent), and as they are converted or bred up to feed fuel assemblies are placed in or proximate the burn region of the core, then moved outward (divergent), and then removed as they are burned up.

The fuel shuffling includes both driver and feed fuel assemblies to simulate and achieve high burn up fuel within the reactor. Due to physical constraints (such as fuel cladding chemical interaction), the feed fuel assemblies may be discharged after they are bred up to driver assemblies and reach a driver region which corresponds to a particular number of cycles (e.g., 10 cycles) and fuel burn up. If feed fuel assemblies are qualified to a higher burn up, these feed assemblies now bred up to driver assemblies can be rotated into the center of the core and then can be shuffled to locations outside of the core.

Many types of reactor designs at BoL may be possible, including ones where the ignition point is located within the center of a cylinder or is positioned at the end of a particular core design. In one particular fuel assembly/core structure, an igniter is positioned in the center of an elongated cylinder that creates a somewhat tubular deflagration wave centered on the center axis of the core. However, it should be appreciated that other igniter placements may be used as appropriate that may not be centered or configured for other appropriate core shapes and deflagration wave shapes and/or movements. The resultant moving of assemblies may be determined as a result of the branch search optimization of selection of which fuel assemblies to move and to where and optimizing over a large input availability set and criteria (fuel burn state, material limit state, core criticality, etc.).

At BoL, in addition to an igniter, enriched feed assemblies (either prior bred or enriched externally and then inserted) may be placed at the start of their lifetime at the center of the core and may be shuffled outward to the driver region from which they are discharged. Bred up driver fuel assemblies are positioned just outside of the wave (e.g., on side of burn front opposite the core center with burn front is moving outward from central igniter) and within the wave as the wave moves away from the burned up igniter material. Bred up assemblies are cycled to the burn region to maintain the standing deflagration wave and if within physical constraints, may be shuffled outward and then discharged. The system may be adapted to evaluate simple and more complicated movement types, and to determine what sets of movements are optimal.

Driver feed assemblies may remain in the core for a certain number of cycles (e.g., three cycles). This shuffling pattern represents the power production of bred up fertile fuel (e.g., fissile fuel) and is eventually replaced by new feed fuel after it achieves fuel burnup or exceeds other fuel assembly limits. Restrictions on the movements of such types of fuel assemblies may be codified into one or more rules that serve as restrictions on where fuel assemblies may be moved. Restrictions on certain fuel movements may be based on reactor parameters such as fuel state, material state/burn up, core criticality, location/shape of deflagration wave, etc. Therefore, the state of each assembly and its history in the reactor along with fuel movement rules are used to determine what movements each assembly may make during subsequent cycles of the reactor and can be modeled and considered within the reactor system. It should be appreciated that there may be any number of different classifications of fuel assemblies and any number of fuel movement rules that can be used with those assemblies. In some cases, different classification of fuel assemblies may have different fuel movement rules associated with those assemblies.

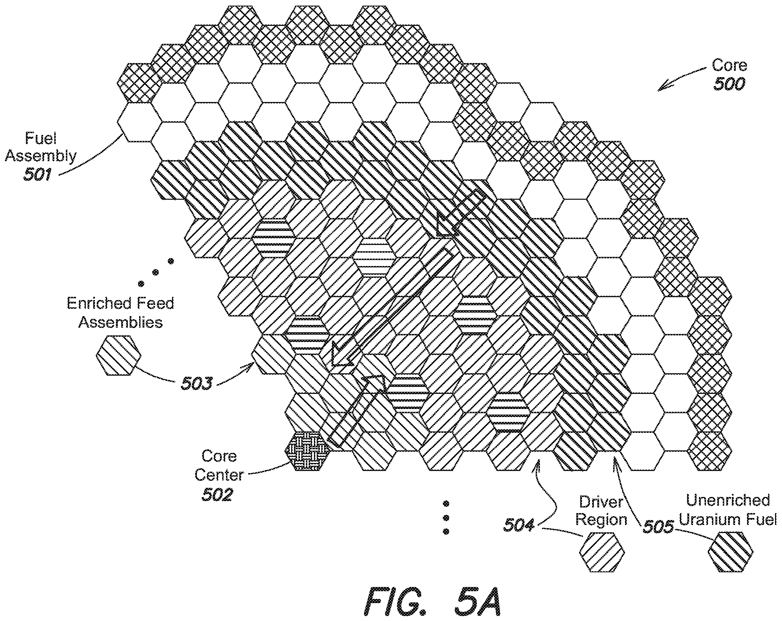

Certain fuel assemblies may be identified and selected as potential candidates for movement within the core based on their state as determined through simulation and modeling and based on restrictions. For instance, one particular fuel assembly may be identified as a feed fuel assembly or driver fuel assembly, based on one or more modeled parameters (e.g., estimated driver fuel type or fissile fuel level) that it should be moved to another location in the core. For example, a feed fuel assembly may be placed in to increase or slow down breed up of the feed fuel, and/or a driver fuel assembly may be placed proximate the burn region, such as a burn front of a TWR reactor, to affect the location, shape, and/or speed of movement of the burn front. A number of additional assemblies may be identified in this manner and may have similar state and/or restriction characteristics. According to one aspect, based on where the assemblies could be located in a next cycle, cascades of moves may be determined for these individual fuel assemblies (e.g., by a computer system) since each fuel movement may displace another fuel assembly which will then need to be moved within the simulated state and/or restriction characteristics. In this manner, one fuel cycle may include a series of cascaded moves of multiple fuel assemblies beyond those initially selected with each group of fuel moves necessitating fuel moves for the fuel assemblies displaced by the prior set of fuel moves. The reactor core can then be simulated or propagated forward in time to determine if those fuel moves meet or exceed certain criteria. If more than one fuel cycle is to be simulated to determine optimal fuel moves, all, or some r none of the same initial set of selected fuel assemblies or different fuel assemblies may be selected to move in the simulated second fuel cycle, with each of those fuel moves cascading or necessitating fuel moves of those fuel assemblies displaced by the prior fuel moves. As noted previously the fuel assemblies selected for moving and/or the movements of those fuel assemblies may be determined based on restrictions, heuristics, and/or criteria. The fuel moves may also include removing one or more fuel assemblies from the core based on restrictions/and or criteria. Possible chains of moves may be constructed and stored as possible group moves and the optimal groups and series of moves based on the restrictions may be selected as where the assemblies should be moved. Some example core designs with particular types of fuel assemblies are shown by way of example in Figures 5A-5C as discussed below.

The system performs a branch search that generates multiple possible selections of fuel assemblies to move and then determining which ones to optimally move as measured against some parameters of fuel burn up limits (it may be desired, in one embodiment, to achieve highest fuel burn up) - material burn up limits (cannot exceed material effects of neutronic environment), criticality in core maintained at one (1), among other conditions or desired outcomes.

At block 205, the system determines, for each set of possible group moves, an analysis of the effect of the moves on the reactor. This may include, for example, running one or more simulations based on a current state of the reactor, and any number of subsequent states after one or more series of group moves. In one embodiment, a number of fuel cycle/shuffles are determined until an external refueling operation. It should be appreciated that any number of fuel cycles/shuffles may be evaluated in evaluating optimal fuel movements. In on example, the fuel movements may be simulated from BoL to EoL for a particular or group of fuel assemblies or over a predetermined time or number of fuel cycles or any other suitable criteria.

As discussed above, one or more systems simulate neutronics, fuel performance, thermal-hydraulic, kinetic, mechanical, safety and economic parameters associated with the core responsive to movement of one or more fuel assemblies as discussed further below. Limitations may be determined for certain parameters associated with the reactor, such as temperature limits, pressure limits, reactor criticality swings, etc. that, if exceeded, would eliminate a candidate move set as a possible move. For instance, at block 206, is determined whether any of the predefined limits associated with the reactor are exceeded for a particular move group or movement. If one or more limits are exceeded, the particular set of group moves is removed at block 207 from a list of possible group moves. Such moves may be determined from an initial state of the reactor (e.g., BOL), through one or more subsequent states (e.g., up until a refueling operation where additional assemblies are added and other assemblies are removed from the reactor. Then, the reactor model may be updated with a new initial state and analysis of further fuel movements may be calculated. Indeed, it should be appreciated that optimal fuel moves may be calculated that span the life of the reactor. If the particular set of group moves is removed at block 207, the system may return to block 205 to determine alternative movements for the selected fuel assemblies and determine if those moves meet or exceed the criteria. Additionally or alternatively, the system may return to block 204 to select an alternate group of fuel assemblies to move and proceed through block 205 to determine a set of moves for the new group of selected fuel assemblies.

If one or more limits are not exceeded, a score may be determined which is associated with the set of group moves at block 208. For instance, the system may be capable of determining a score associated with each of the candidate group moves. The score may be based on one or more parameters, including, but not limited to existing core data, history of core and fuel assembly parameters, among other information. The score may, in one example implementation, be determined based on a number of factors including an evaluation of how well the reactor performs within safety limits, a criticality window, to what level particular fuel assemblies are burned, bred up, or other state information associated with particular fuel assemblies. In other implementations, score could be based on one or more of the factors described herein including transient performance, power coefficients, burnup limits, assembly flow limits and requirements, criticality requirements, peak flux requirements, power shape requirements, among others. It should be appreciated that the score can be determined at the beginning of each cycle, it should be appreciated that the score determination may be extensible into all time periods of simulation within a cycle and N cycles deep into a fuel management scheme.

If all of the desired or possible group moves are evaluated (as determined at block 209), the system selects an optimal move set at block 210. Such information may be presented to the user by the system, may be provided as control information to be used by another system, or may be provided as an output in some other form. At block 211, process 200 ends.

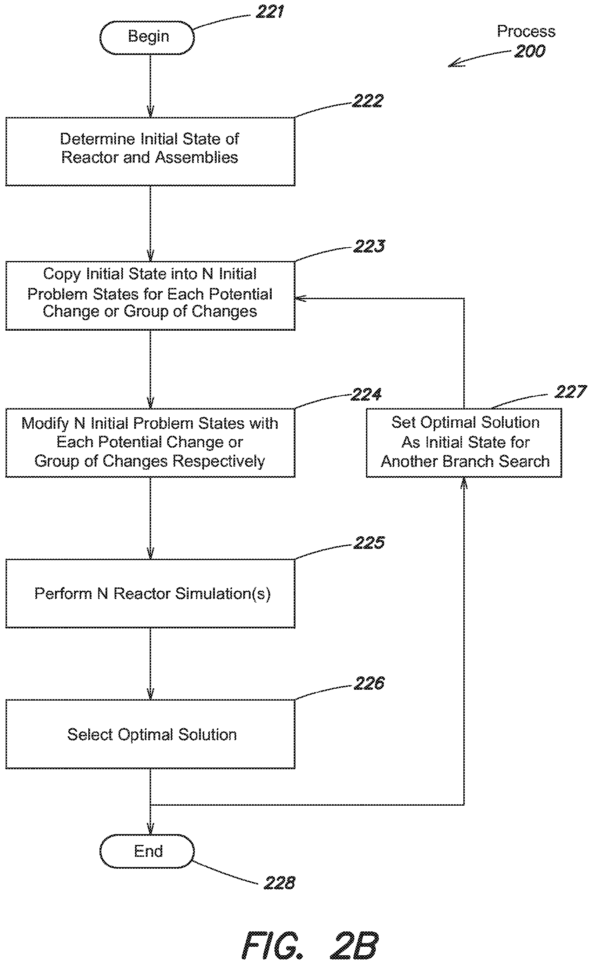

Figure 2B shows a more detailed process 220 for selecting an optimal solution using a branch search according to one embodiment. At block 223, the system determines an initial state of the reactor and its fuel assemblies, and any other related parameters. For instance, the state of the reactor used may be the Beginning of Life (BOL) condition of the reactor, the state of the reactor core at a fuel cycle, or other appropriate time. At block 223, the system takes the initial state of the reactor (e.g., the initial state of a problem) and copies the state into N different problem initial states. Practically, this may be accomplished by duplicating a reactor model and its associated data to make multiple copies. At block 224, the system modifies N initial problem states with each potential change or group of changes. For instance, the changes may be one or more changes of locations of fuel assemblies within the reactor core, types and/or amount of fissile and/or fertile fuel in a particular assembly, etc. Each of the N modified problem states are then evaluated by performing N reactor simulations, and then selecting an optimal solution at block 226. In one implementation, a reactor model is copied and multiple parallel simulations are performed by a specialized computer system (e.g., as discussed further below). All N results are then examined and the best result is chosen to be the solution to that branch search

Either the solution is sufficient for the problem that was being solved and the process is complete at block 228, or the system uses the new solution as the initial state for another branch search at block 227 and the branch search process is repeated. In this case, the initial state would be the state of each assembly and which assemblies are picked to be moved and then moved in the general convergent/divergent manner (which is one example baseline assumption and as discussed, reduces the possible number of move permutations). Each level of the branch tree then selects other and/or subsets of assemblies for movement for each fuel cycle or a different location to be moved to for that fuel cycle, the system performs this operation for multiple fuel cycles - modeling the core environment for each cycle and updating the fuel assembly state.

Although it is appreciated that any reactor parameter may be modified and/or used as a limit, some examples of the state factors that could be modified, include, but is not limited to smear density, fuel material and location within fuel element, location in core, burnup state (how stored - time, fission product, pressure, actual measure or inferred from actual measure), controls insertion state, and/or expected power of the reactor, among other factors. Practically, some factors that can be modified include the number of assemblies shuffled, locations and/or direction where assemblies are shuffled, what assemblies are chosen to be shuffled (by location, burnup, composition, power, etc.) and the results may be evaluated on K-effective, power distribution, and reactivity swing, among other factors.

Certain parameters, if exceeded, can be used to remove certain move groups (e.g., having a certain reactivity swing above a predefined threshold). Other parameters may be used to eliminate certain branches altogether. In another embodiment, certain groups of parameters may be used to define a "score" for a particular set of parameters. This score may be used to evaluate the adequacy of a particular result of a simulation using the set of parameters. In some embodiments, such a score may be a weighted score, with certain parameters, having precedence or weight over other parameters.

In one particular example, the analysis may begin using an initial core configuration (e.g., a reactor state with fuel assembly elements of particular types located within certain locations of the core). At another step later in time (e.g., during a refueling operation), a number of fuel assemblies are moved to a new possible state. This can be done, for example, using a prescribed path with permutations on positions, using prescribed paths with random permutations on positions, using random permutations on positions, or other prescribed methods, alone or in combination. The modified cores associated with the new candidate states are then modeled individually by the reactor core modeling system (e.g., based on a simulation of the reactor physics) and a function is applied to each of the new candidate states. The system then can compare the results of the function to choose the next best core shuffle (for a single cycle look). In one implementation, the system then selects the best shuffling pattern to calculate a new cycle then restarts the evaluation process for the next step later in time (e.g., for a later refueling operation). Evaluations may be conducted for individual steps (e.g., optimizing individual steps), or the evaluations may occur over multiple cycles to optimize over those multiple cycles.

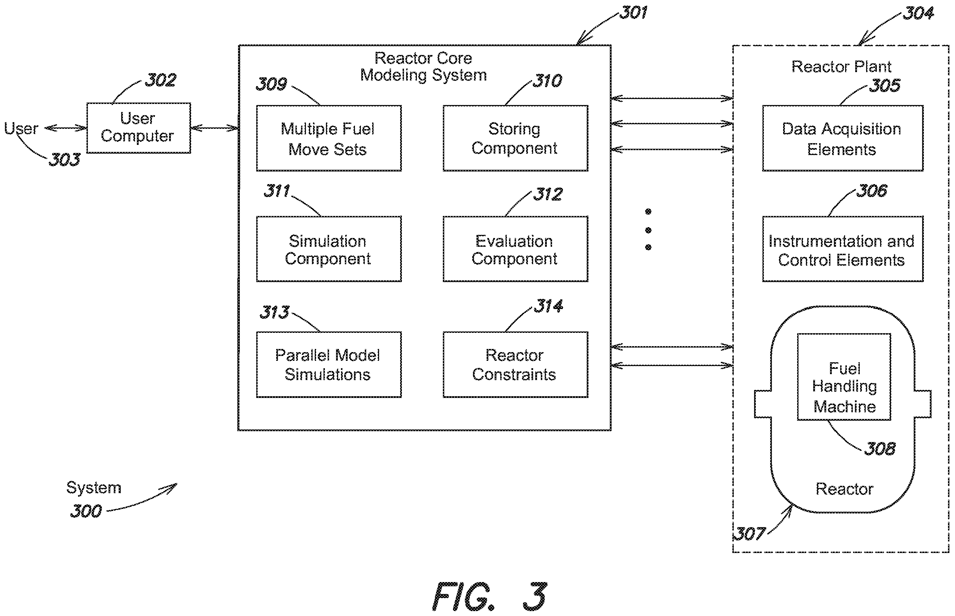

Figure 3 shows an embodiment of a system 300 that may be used to model and control a reactor. In particular, a distributed system 300 includes a reactor core modeling system 301 that is coupled to a user computer 302 operated by user 303. System 301 is capable of communicating information to and from one or more elements, systems, and other entities relating to a modeled nuclear reactor.

System 301 is coupled to an operating reactor plant 304. Plant 304 may include one or more elements including, but not limited to, data acquisition elements 305 that captures operating data relating to operation of nuclear reactor (e.g., reactor 307). As discussed, the reactor may be any appropriate type of reactor, and in some instance may be a TWR reactor. Such data acquisition elements may include one or more systems, computers, sensors, or other elements that can be used to capture and communicate plant data. The reactor core modeling system 301 may be capable of evaluating actual in-plant data for the purpose of performing simulations of the reactor. Such actual in-plant data may be used to evaluate candidate fuel moves within the reactor.

Plant 304 may also include one or more instrumentation and control elements 306 which can be used to operate reactor 307. Such systems may include one or more systems, computers, electromechanical devices, control systems, valves, or other entities used to operate and monitor reactor 307.

Notably, reactor 307 may include a fuel handling machine which may perform one or more fuel assembly moves within the reactor. The fuel handling machine may be in-vessel, external vessel or a combination of both. Such fuel moves may include those determined by any process discussed herein (e.g., as discussed above with reference to Figure 2).

Reactor core modeling system 301 may include one or more elements including, but not limited to, data sets, modules, systems, components, and/or any other entity used to model and simulate a nuclear reactor. System 301 may include a number of candidate fuel moves sets (e.g., multiple fuel moves sets 309) that identify potential fuel moves according to one or more fuel move rules. System 301 may also include storing component 310 that maintains information associated with the reactor model and its simulations. For instance, component 310 may include a database engine is adapted to store operating parameters associated with the reactor plant. In one example, component 310 may be capable of storing history associated with fuel assemblies, their operating life, history of fuel moves, among other information.

System 301 may also include one or more simulation components 311 such as, for example, modules that simulate neutronics, fuel performance, thermal-hydraulic, kinetic, mechanical, safety and economic parameters associated with the core. According to one embodiment, one or more simulation engines may be provided that simulate various aspects of the core. For example, one or more simulation engines may be provided that perform analysis of core neutronics, such as the MC2/DIF3D/REBUS suite of deterministic simulation modules, DIFNT advanced diffusion solver, stochastic neutronics modules such as MCNPXT or MCNPX, engines that perform thermal-hydraulic analysis such as subchannel analysis (subchan) and/or COBRA, fuel performance feedback analysis, core mechanical analysis such as by COBRA, temperature analysis, transient analysis such as by SASSYS/SAS4A, uncertainty analysis using a module that determines covariance and sensitivity matrices, among others.

System 301 is capable of initiating parallel model simulations 313. In particular, is appreciated that it would be beneficial to perform multiple simulations in parallel, each associated with respective potential fuel moves as discussed above. To this end, system 301 may be adapted to spawn multiple parallel computations given an existing reactor state and multiple fuel move sets 309. In one example implementation, system 301 uses one or more parallel processes to model and simulate one or more fuel move sets in parallel.

System 301 may also include an evaluation component (e.g., evaluation component 312) adapted to determine an optimal fuel move set among sets 309. Certain fuel move sets may be ruled out, for instance, if their simulations cause one or more reactor constraints (e.g., reactor constraints 314) to be exceeded. For instance, a simulation of one particular move set may cause a criticality determination to deviate outside an acceptable range. In another example, another simulation of a particular move set may cause a fuel assembly to exceed a particular temperature limit or any other reactor performance parameter. In the case of a branch search, it is appreciated that the number of N sets of changes may be reduced from the total number of parameters that could be changed. For instance, according to certain assumptions (e.g., a certain type of fuel assembly will not be moved to a certain core location based on its characteristics), certain branches may be eliminated and the number of parallel simulations can be reduced.

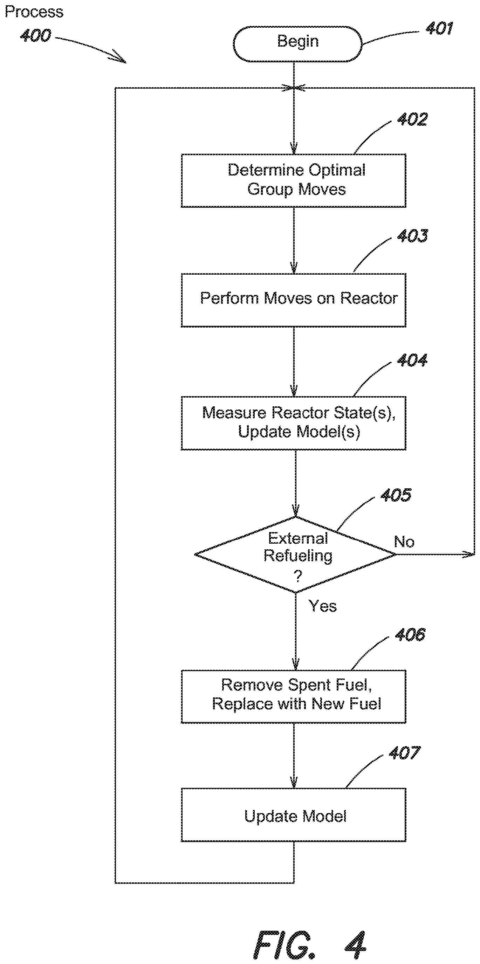

Figure 4 shows an example process 404 performing reactor analyses in relation to operating an actual nuclear reactor. At block 401, process 400 begins. At block 402, the system (e.g., system 301) determines at least one set of optimal group moves (e.g., as discussed above with reference to Figure 2). At block 403, the system communicates the optimal group moves to a system that performs the selected moves on the reactor core. For instance, a fuel handling machine may be capable of executing the indicated fuel moves within the core. In one embodiment, the system may issue control commands to a fuel handling apparatus.

At block 404, the system may measure one or more reactor states, and as a consequence may update one or more models of the reactor. For instance, actual reactor state may be determined based on information obtained through one or more data acquisition elements, instrumentation and control elements or other systems or components. At block 405, it is determined whether or not an external refueling occurs that involves replacing fuel assemblies inside the core with new fuel assemblies from outside the core. If no external refueling occurs, the system may determine another series of optimal group moves for next fuel move cycle to occur with the reactor. The system may perform multiple cycles of in-core fuel moves prior to an external refueling operation.

If at block 405, it is determined that an external refueling is to occur, spent fuel may be removed and replaced with new fuel from outside the reactor core at block 406. As a result of the refueling, models maintained by the system need to be updated (e.g., at block 407). Process 400 may begin again including one or more in-core move sequences, followed by an external refueling operation. In this way, the system may be used as a tool to analyze fuel moves with an operating reactor.

As discussed above, different types of fuel assemblies may be characterized as different types of fuel and arranged accordingly in the reactor core. The type of fuel assembly, its history (e.g., conversion to driver fuel and/or burnup), and fuel move rules may determine where the fuel assembly will be moved to for any particular burn cycle (e.g., by a branch search calculator). One output of a branch search according to one embodiment, provides a prediction of reactivity change over a move cycle. Further, schemes may be developed that permit the branch search to optimize the power shape in an equilibrium state.

In one circular arrangement of a TWR core as shown in Figure 5A, a core is arranged using hexagonal fuel assemblies having heights (not shown) and which is modeled by a reactor core modeling system. Fuel assemblies may be characterized as driver fuel (which may include a sub-type of which driver fuel, bred up or enriched), feed fuel, and Lead Test Assembly (LTA) fuel, each of which is initially placed within locations of the core. LTA fuel may be, for example, an experimental assembly which is irradiated in a test program which could be eventually be used as fuel assemblies for the core.

Fuel assemblies may be further characterized and assigned to certain groups according to their burnup level. For instance, fuel assemblies may be characterized further as feed fuel and driver fuel, and there may be further gradations of these types of fuel. For instance, feed fuel may be characterized as inner, outer, middle and center feed fuel. Driver fuel may be characterized as booster, middle, and inner driver fuel, which characterizes the location of the fuel within the core. Inner fuel is positioned towards the radial center, outer is positioned towards the periphery, middle is located between the inner and outer fuel elements. Center feed fuel is located in the center of the core. Depending on their characteristics, different assemblies may be more suited for particular locations within the core.

Other types of elements (e.g., safety rods, reflectors, material test assemblies, core barrels, control rods, etc.) may assume locations in the core to monitor and control the reactor. In one example implementation, the fuel may be arranged radially from a center location into a number of rings. The rings may include one or more of each or any combination of reflector rings, a radial shield, and a core barrel ring.

As discussed, one or more fuel assembly parameters may be used to determine core moves. Fuel assembly parameters may include one or more of cladding assembly structure, the type of fuel, enrichment level, burnup history (of fuel and/or structure), k_{eff} of a particular assembly, reactivity swing over a cycle (e.g., as measured by neutron flux of a particular assembly), time length of a cycle, among other parameters. In one implementation, a number of classifications may be determined for particular assemblies based on their parameters, and fuel movement rules may be used to restrict possible movements of different types of assemblies. Certain fuel movement rules may be implemented to create certain patterns (e.g., a zig-zagging effect where fuel is brought in an out of the burn region, a chain of a certain number of moves every other cycle, etc.). Further, the system may also include inputs that interact with the search program, such as by providing inputs to the branch search calculator (e.g., stop at cycle four, reduce burn-up by using more enrichment, etc.).

In one example, a driver-type fuel assembly management scheme (as discussed further below) may be determined that is convergent, wherein enriched assemblies are charged into a particular ring (e.g., in the case of a circular core design), slowly marched (incrementally shuffled) towards the center of the core, and discharged from a central region of the core as the fuel assemblies reach high burn up. These driver assemblies may remain in the core for a number of cycles (e.g., three cycles).

The driver (fissile) fuel assemblies are centrally placed in the burn region (which is proximate the burnfront in a TWR reactor) when the driver fuel assemblies are fissile and placed in outer core when either fertile or in their decline and somewhat act like neutron absorbers or have low reactivity. Feed fuel assemblies are generally bred up in outer regions to become driver assemblies, and when the assemblies reach a certain state of k_{∞} or reactivity or bred up status, then the bred up driver fuel is moved to be burnt. In particular, these bred up assemblies are moved to an area of a desired location of the deflagration wave, relative to the core or designated burn area.

In another example, a feed fuel assembly type management scheme is implemented and is referred to herein as convergent-divergent, wherein several fuel assemblies march or incrementally shuffled from a periphery of the core towards the center during a fuel cycle. In some cases, the feed fuel shuffling includes both enriched and unenriched fuel assemblies to simulate high burn up fuel within the reactor. Due to physical constraints (e.g., fuel cladding chemical interaction), some fuel assemblies may be discharged once they reach a driver region which corresponds to a particular number of cycles (e.g., 10 cycles). If feed fuel assemblies are qualified to a higher burn up, these feed assemblies converted to driver assemblies can be rotated or shuffled into the center of the core and/or then can be shuffled to locations outside the burn region as burn up increases and then retired either in the core perimeter and/or outside of the core.

Driver fuel assemblies, which may be an enriched assembly introduced external from the core and may start their lifetime at the central region of the core, while bred up driver fuel may starts its lifetime outside the burn region and may be moved towards the central burn region of the core as it is bred up to driver fuel, and then when bred up, each type of driver fuel assemblies may be shuffled out towards the driver region from which they are discharged. Enriched fuel assemblies (which may act as a portion of the igniter) may remain in the core for a certain number of cycles (e.g., three cycles). This shuffling pattern represents the power production of enriched driver fuel and is eventually replaced by unenriched feed fuel after it has been qualified to higher burn up and residence time. The transition and maintenance of criticality during the transition of removing burned up enriched (igniter) driver fuel and transitioning to bred up driver fuel is particularly sensitive and benefits from the above described modelling and branch search methodology on optimizing fuel burn up and maintaining criticality of the reactor. Restrictions on the movements of such types of fuel assemblies may be codified into one or more rules that serve as restrictions on where fuel assemblies may be moved. These restrictive fuel movement rules may be used to determine candidate sets of fuel moves to be evaluated through simulation. Therefore, the state of each assembly and its history in the reactor along with fuel movement rules are used to determine what movements each assembly will make during subsequent cycles of the reactor.

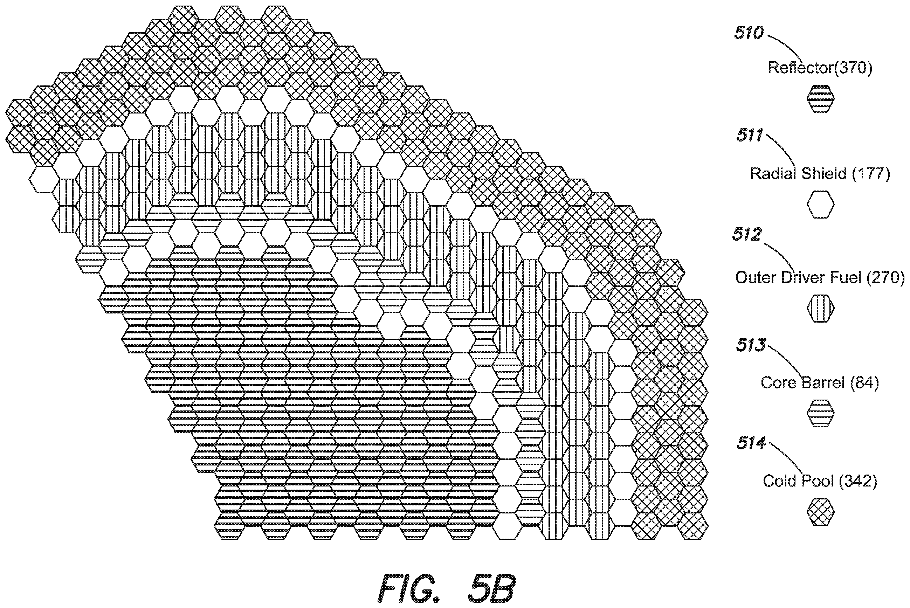

Figure 5B shows another exemplary arrangement of a TWR core, including various classifications of fuel assembly types. As discussed, fuel assemblies may be classified according to their location within the core, or relative to the breed and/or burn regions, their level of enrichment and burn history. Figure 5B shows a particular arrangement of fuel according to one embodiment including reflector fuel 510, radial shield 511, outer driver fuel 512, core barrel fuel 513, and cold pool fuel 514.

Reflector fuel (e.g., reflector fuel 510) are generally fuel assemblies designed to reflect neutron flux back into the fuel region of the core. Radial shield elements 511 are elements designed to absorb neutrons to reduce flux passing through them to limit neutron damage to the structures they are shielding. Outer driver fuel 512 and core barrel fuel 513 determine a location of a fuel assembly in the core that is generally within a particular specification. In one example case, this specification also includes changed in enrichment or smear density compared to other fuel assemblies.

Cold pool fuel 514is fuel stored in either the in vessel storage or ex-vessel storage. This fuel may or may not return to the active fuel region of the core to be burned.

As discussed, there may be different classifications of fuel based on their location in the core as well as their level of conversion from feed to driver fuel, burn up of driver fuel, among other parameters. For instance, there may be different types/classifications of fuel such as feed fuel (inner, middle, outer, center), driver fuel (inner, middle, booster, outer), and LTA (Lead Test Assembly) fuel. It should be appreciated that classification of a particular assembly can change over the lifetime of the fuel as it is bred up from fertile to fissile fuel and then burned. Further, the fuel in a particular assembly may be `burned up' but the structure (e.g., cladding) may still be within physical limits so the assembly may be used as neutron absorber/control.

For example, for different classifications/subclassifications, there may be chosen different levels of enrichment for these assemblies. For example, driver fuel may have some of the highest level of smear density as compared to feed fuel, which has lower levels of fissile fuel. For instance, booster driver fuel at BoL may have an amount of fissile fuel of approximately 20%, while inner driver fuel may have a level as low as 10% in some locations. For feed fuel assemblies, some assemblies such as outer feed assemblies may have a fissile fuel level below 1% whereas center feed fuel assemblies that are now driver assemblies may approach that or exceed fissile amounts (e.g., 12%) of driver assemblies as they are bred up. It should be appreciated, however, that many other types of fissile fuel amounts and reactor core types can be evaluated. For example, depleted uranium, highly enriched uranium, or any level of enrichment in between may be used and modeled.

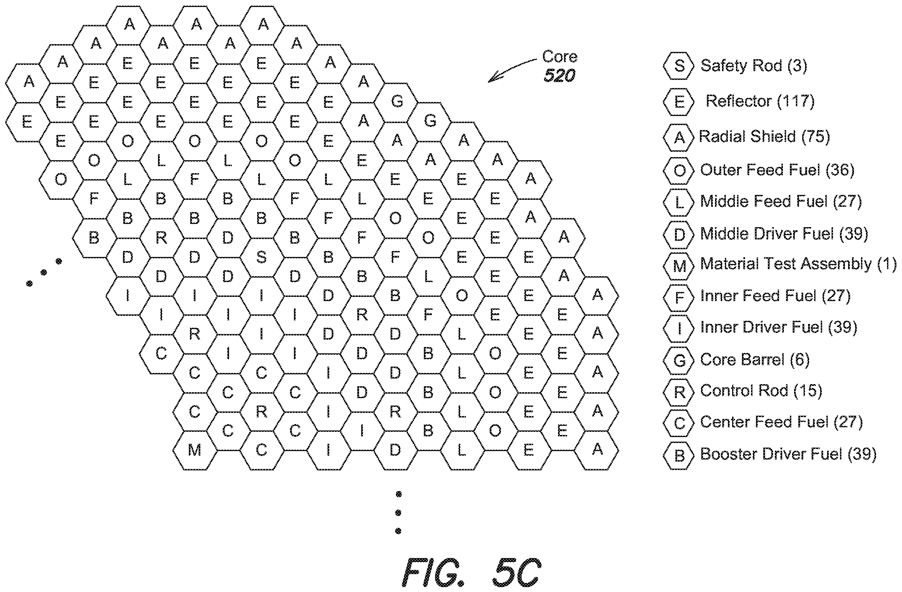

Also, such classifications of fuel assemblies may have assigned locations within a particular core design at BoL or assigned regions for particular states of a fuel assembly's lifetime. For instance, Figure 5C shows a particular core design 520 that shows 1/3 of a particular circular core, with each of the different types of assemblies within particular core locations. The core shown in Figure 5C may be a radial layout of the core at the beginning of the reactor core life including the assembly counts for a full core. The example layout shown includes two reflector rings (which could be moveable or unmovable), a radial shield, and a core barrel included for barrel dose estimates. Such a design may be used in association with fuel type characteristics for particular fuel assemblies as a restriction as to where certain fuel assemblies may be moved within the core. Such information may be then used to determine possible fuel moves, from which optimal fuel moves may be selected.

It should be appreciated that other types of fuel and assembly types and core layouts may be used having different geometries, requirements and parameters.

### Reactor Modeling

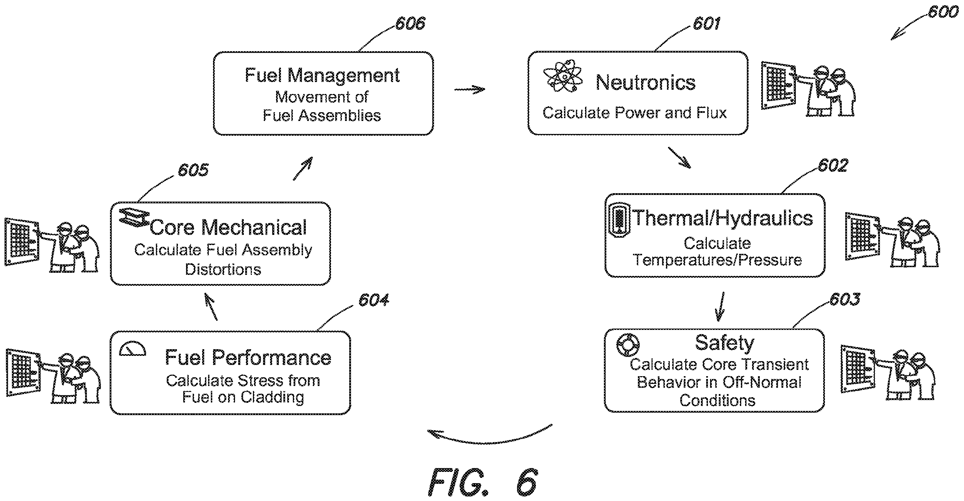

Figure 6 shows one conventional process 600 for modeling a reactor design and operation. For instance, it is appreciated that although tools exist for analyzing various aspects of a reactor, many of these tools are difficult to learn, decoupled from one another, and are not updated. In a traditional type of analysis, each case is passed from team to team with each team doing specialized analysis. For instance, a general reactor design is created and information regarding each aspect of the simulation is passed from team to team, such as neutronics 601 (e.g., calculating power and flux calculations), thermal/hydraulics 602 (e.g., calculating temperatures and pressures), safety 603 (e.g., calculating core transient behavior in off-normal conditions), fuel performance 604 (e.g., calculating stress from fuel on cladding), core mechanical 605 (e.g., calculating fuel assembly distortions), fuel management 606 (e.g., selecting and determining which and how fuel assemblies should move), and transient analysis (e.g. updating reactivity coefficients, neutronics, fluid flows, temperatures, determining control rod worth and safety and accident analysis). When minor changes are made, delays are experienced as the entire cycle needs to be performed to validate minor changes. Thus, for minor changes, such a process is neither feasible nor efficient.

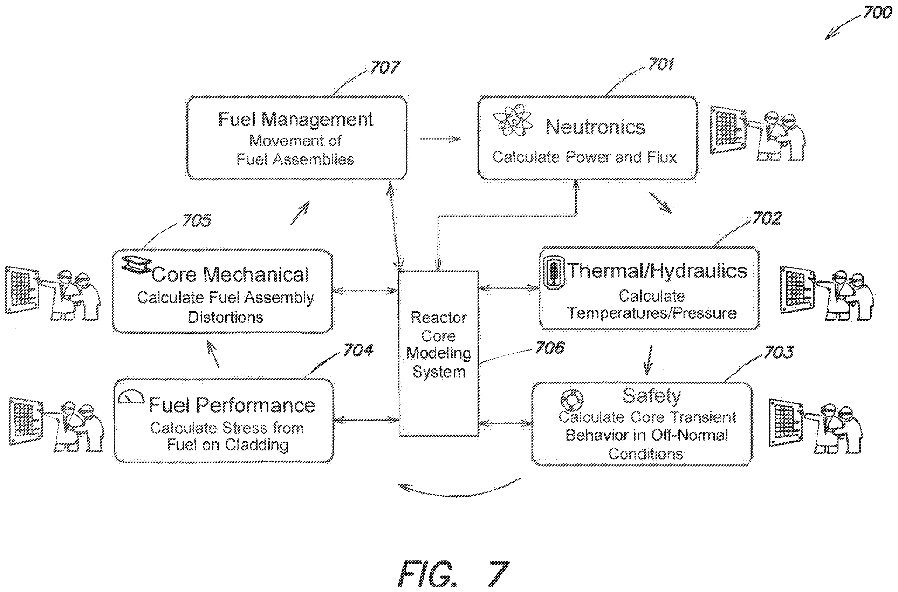

Figure 7 shows a modified process 700 for modeling a reactor. In this modified process, a reactor core modeling system 706 is provided that permits a single analyst to consider all aspects of core design, and make minor changes that can be efficiently modeled and simulated. System 706 includes a centralized models and interfaces that efficiently communicate to the required modules (e.g., modules 701-705) to perform reactor analysis. For instance, a minor change can be made with respect to fuel location, and the effects of the location change can be re-simulated without a great deal of effort and in less time. Also, because simulations with minor changes can be made in less time, such simulations may be optimized among a number of possible design choices. Also, because manual efforts are not focused on data handling and communication and coordination between groups, more efforts can be directed on developing more accurate models for reactor components or more optimal reactors designs and fuel movements.

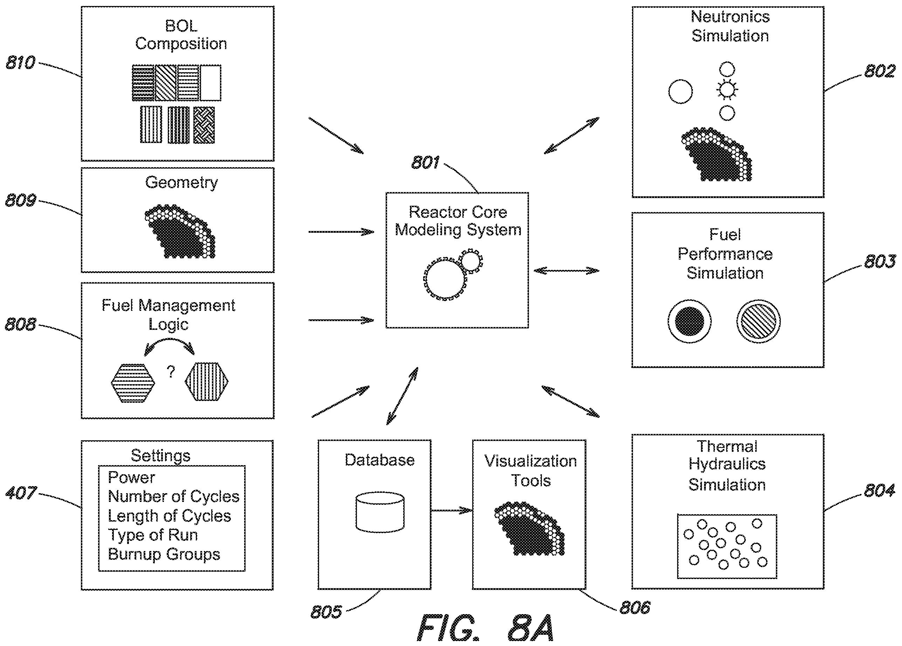

Also, as shown in Figure 8A, various inputs and outputs may be made available to an analyst/user for the purpose of performing modeling and simulating a reactor plant. For instance, a system that is provided that includes a single tool and sets of interfaces that permits design and simulation of the reactor. For instance, reactor core modeling system 801 may be configured to perform a number of functions, including, but not limited to neutronics simulation 802, fuel performance simulation 803, thermal hydraulics simulation, BOL composition 810, geometry functions 809, creation of fuel management logic 808, management of settings 807, database storage 805 and visualization tools 806.

Further, the system provides efficient communication and coupling between new and existing modules and the analysts who use them. Further, because the process may occur more efficiently, optimization is permitted as multiple simulations associated with a number of design decisions may be run efficiently. A platform is provided where multiple simulations associated with different design may be run in parallel, further reducing the time and effort required to evaluate multiple design options. This may be useful, for example, for determining an optimal core design based on multiple candidate sets of fuel moves as discussed above.

Further, it is appreciated that if the modeling and simulation process can become more efficient, it may be more effectively integrated into reactor plant operations for the purposes of monitoring the reactor, simulating potential changes, and monitoring reactor perturbations responsive to reactor changes. Notably, such changes may include reactor control changes during actual operation (e.g., control rod withdrawal).

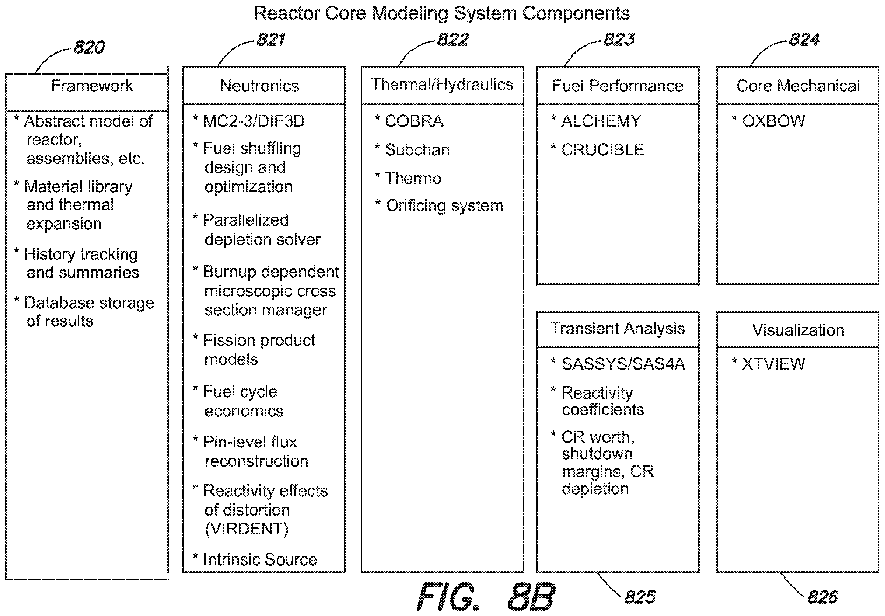

Figure 8B shows a more specific example of components used by a reactor core modeling system (e.g., system 801). A large number of physical interactions take place inside a nuclear core, spanning many orders of magnitude in spatially and temporally. A neutron with a lifetime of 3×10⁻⁷ seconds may cause a fission that releases its decay heat over the following 3×10¹² seconds. Gamma rays from the decaying fission products may asymmetrically heat a shield structure, causing it to mechanically bow and pinch the core assemblies, challenging fuel management. Coolant emerging from neighboring assemblies with different powers may mix turbulently, inducing thermal striping on instrumentation above the core. All these coupled interactions must be considered together to effectively design a nuclear reactor.

For example, one implementation of a reactor core modeling system may include a number of components including framework components 820, neutronics components 821, thermal/hydraulics components a 23, core mechanical components 824, transient analysis components 825, and visualization components 826. For example, framework components 820 may include an abstract model of the reactor, assemblies, and other components. The framework may also include material libraries and information relating to thermal expansion of those materials. The framework may also provide a database that is capable of storing models, libraries, historical information and any analysis results.

The nuclear chain reaction occurring in the core serves as the primary heat source for the plant. The nuclear simulations must determine the spatial distribution of the neutrons, their energy spectrum, their direction of travel, and the rate with which they are undergoing various interactions with the surrounding nuclei (i.e. scatter, capture, fission, n2n, etc.). The fission and capture rates determine the heat generation rate and the fuel burnup rate while the scattering interactions are strongly correlated to radiation dose and material damage. Neutronics components 821 may include, for example, one or more components for modeling neutronic information. These may include, for example, code modules that are capable of performing one or more analyses. For example, they may include MC2 (fast reactor neutron spectra processing codes), DIF3D (nodal code for solving steady state neutron diffusion), a parallelized depletion solver, a burnup dependent microscopic cross section manager, fission product modules, fuel cycle economics modules, fin level flux reconstruction modules, reactivity effects of distortion modules, intrinsic source modules, REBUS (compute the neutron and gamma flux), among others. Modules may include conventional codes that may be accessed by the reactor core modeling system, and interface code may be provided to extend control and parameter adjustment to a user interface associated with the reactor core modeling system.

In judging the merits of advanced reactors design iterations, it may be beneficial to understand the fleet performance of a plant as well as the early performance of the 1^{st}-of-a-kind. The state of fuel cycle equilibrium, where decades into operation the charge and discharge of a reactor becomes static, provides a useful representation of the Nth-of-a-kind fleet performance, and thus a target for designers to approach with more explicit cycle-by-cycle treatments. To support this mode, the reactor core modeling system may contain a module (which may be based on the REBUS methodology) to compute the equilibrium fuel cycle implicitly, allowing rapid analysis and iteration.

Like the other physics modules, the nuclear simulations depend on the physical layout and composition of the core. Uniquely, however, evaluated nuclear data is required to properly model the nuclear interactions. Difficult measurements of neutron-nuclide interaction rates vs. incident neutron energy are supplemented by nuclear models by various research institutions and national laboratories worldwide and distributed as data libraries.

The heat released from the fissioning nuclei must be transported to the power conversion system at the rate it is produced. Flowing coolants such as water, liquid metal, gas, or molten salt are typically employed for this purpose. The coolant flow characteristics determine the specifications of major equipment such as pumps and heat exchangers.

The fuel-to-coolant ratio inside the fuel assemblies is chosen carefully, with tradeoffs between criticality, heat rate, and flow rate considered. Because coolant pressure is proportional to the square of flow velocity, designs pushing for high-speed coolant must have stronger (i.e. thicker) structural members, which impede aspects of the nuclear chain reaction.

Coupled reactivity effects between the chain reaction and the coolant can be very strong. When coolant is heated, thermal expansion decreases its density, and neutron moderation by scattering is diminished. In water-cooled slow-neutron reactors, this is a negative feedback, as the coolant doubles as a neutron moderator. Neutrons that slow down in the coolant, protected from parasitic captures in ²³⁸U, can efficiently fission ²³⁵U fuel upon reentering the pins. In the fast-neutron regime the coolant density feedback is positive: faster neutrons release more secondary neutrons per fission and are less likely to be parasitically captured.

Subchannel analysis may be performed in the reactor core modeling system in a variety of levels of fidelity, depending on the use case. A simple non-communicating subchannel module provides rapid scoping results, while multi-assembly communicating subchannels with inter-assembly heat transfer cases may be run for higher-fidelity analysis. The high-fidelity module may build continuous pin-level power distribution in parallel.

Thermal/hydraulics components 822 for simulating and modeling one or more of these effects may include, for example, one or more components for modeling thermal and hydraulic performance of specified reactor elements. For example, they may include COBRA (transient and steady state sub-channel analysis code), SUPERENERGY (steady state sub-channel analysis code), SUBCHAN (simple, fast steady-state subchannel analysis module), THERMO (simple, fast 1-D thermal hydraulics module) and an orificing system (determines state and changes to any assembly orifices for coolant flow), among others.

The fuel management challenge in some reactors, such as the first-generation TWR design, may be constrained by fixed coolant orificing in each assembly position. Detailed analysis requires a two-pass simulation over the plant lifetime. On the first pass orifice settings are allowed to vary at each cycle to bring the 2-sigma peak cladding temperature to its design limit in each assembly. The maximum flow rate in each position is recorded in preparation for the second pass, which optimizes several discrete orifice zones and settings such that no assembly will surpass its limiting temperature at any point in the plant life. Due to the burden of doubling the simulation work, orificed cases are typically only performed after large design sweeps have settled in on a preferred set of shuffles. By their modular design, the flow orificing routines in the reactor core modeling system may be activated during implicit equilibrium fuel-cycle cases (e.g., at a longer time step than other modules), enabling a more realist set of orifice settings to begin a fuel management design iteration.

The nuclear fuel system, comprising the fuel and the surrounding cladding, experiences the most extreme thermal, radiation, and chemical environment in the plant. The reactor core modeling system may handle fuel performance in any suitable way which may include modules providing a highly-detailed finite-element based mechanistic model of one fuel pin, informed by a database of historical irradiated fuel examinations, and/or a low fidelity finite element model informed by historical irradiate fuel database information and/or output from the high fidelity finite element based mechanistic model. The reactor core modeling system may provide a lifetime power and coolant temperature histories as boundary conditions, and the high fidelity and/or low fidelity mechanistic model may determine internal porosity, fission gas, release, temperature, stress, and strain. The high fidelity model runs are intensive, and are therefore may not be directly coupled into the primary reactor core modeling system loop. Instead, the low fidelity module may be used as a low-order surrogate, informed by the high fidelity module results and may be run (triggered) at every time step in the Interface Stack and updates the burnup and dose-dependent cladding strain, axial fuel strain, fission gas release, thermal bond movement (if applicable), cladding corrosion, and fuel thermal conductivity. These state variables have strong effects on reactivity and the temperature field, and more generally on overall feasibility of a particular idea and therefore must be coupled into an advanced reactor design tool.

Fuel performance components 823 may include, for example, components that model the steady state and transient performance of fuel. For example, they may include FEAST (fuel performance code for predicting steady state and transient behavior of fuel), finite-element based fuel performance code for predicting steady state and transient behavior of fuel), and fast-running surrogate models for rapid coupled fuel performance analysis, among others.

Mechanical interactions of core assemblies and their support structures are coupled strongly into reactor development efforts. Mechanical calculations may be useful when specifying flow rates and power distributions because assemblies may maintain hold-down during normal operation given upward forces from coolant flow, and the pressures exerted by the coolant may cause inelastic deformations of the assemblies, which can lock up the core and cause long (and expensive) delays in fuel management during an outage. Radial expansion reactivity feedback may be a components of the safety case of fast reactors. As the interacting load-pads above the core heat in a transient, thermal expansion pushes them apart. How the fuel density changes (which correlate with reactivity) based on this movement is complex, and can vary so much as to switch signs at different power-to-flow ratios during startup. This behavior is also highly dependent on core restraint design (i.e. whether the design is of the free flowering or limited free bow configuration).

In this manner the reactor core modeling system may provide a close coupling with mechanical analysis. In one example, this is accomplished analogously to the fuel performance. A high-fidelity, long-running FEA mechanical code called OXBOW has been developed that receives as input temperature, dose, and flow histories of one of collections of assemblies from the reactor core modeling system. Detailed evaluations may be performed over a design space, where it computes stresses, elastic and plastic strains, hold-down forces, and geometric distortions as functions of power/flow. Any arbitrary distortions from a power ascent, steady state, or even resulting from an earthquake can be exported back into the reactor core modeling system for a follow-on analysis that uses new and sophisticated methods to compute the reactivity effects. A fast-running, correlation-based distortion module based on OXBOW results runs during normal reactor core modeling runs, providing indications of distortions for design optimization.

Core mechanical components 824 may include, for example, OXBOW and/or other codes related to determining temperature distributions, mechanical distortions, and reactivity feedback due to fuel pin and/or assembly bowing), among others.

A variety of analyses may be used to understand the operational and off-normal behavior of the reactor plant, e.g. how the plant responds when a pump or turbine trips. Safety and transient analysis is the primary focus of any regulatory and licensing activities, and is therefore may be useful in the reactor core modeling system.

In one example of the reactor core modeling system, transient analysis features the SASSYS code (SASSYS) developed by Argonne National Laboratory originally in support of the US fast reactor program. The transient analysis component of the reactor core modeling system may include a reactivity coefficient module to automatically compute kinetics parameters required for coupled neutronic-thermal/hydraulic transient analysis, including the delayed neutron fraction, prompt neutron lifetime, radial expansion coefficient of reactivity, and 3-D spatial distributions of fuel, structure, coolant, Doppler, and voided Doppler reactivity coefficients. Combined with the reactor model assembly dimensions, fuel composition, and flow characteristics, the reactor core modeling system may directly write the core sections of the SASSYS input. In some cases, the plant model of SASSYS is not currently created by the reactor core modeling system, and may be appended to the input from a user-created file, but other examples of the reactor core modeling system may animate aspects of the plant as well as the core.

With a complete SASSYS input file on hand, the reactor core modeling system executes one or more SASSYS cases. It can execute various design basis or beyond-design basis transients (e.g. protected or unprotected loss-of-flow, loss-of-heatsink, transient overpower) as well as a series of cases at varied power/flow ratios to compute the power defect. Sweeps of cases perturbing reactivity with varied-frequency oscillations is used to numerically compute the frequency-domain full-power transfer function of the plant, which is then fed into the frequency stability module of the transient analysis component to estimate the gain and phase stability margins, a key design parameter for any plant.

Statistical sampling of the reactivity coefficients and other core inputs may be used to run hundreds of SASSYS cases in parallel on a high performance computer to determine target values of input uncertainty. This may provide the intelligence that drives uncertainty goals that drive model choices, tolerance specifications, and desired nuclear data uncertainties.

Transient analysis components 825 may include, for example, components that are capable of performing transient analysis of the reactor. Transient analysis components 825 may include, for example, SASSYS/SAS4A (reactor dynamics and safety analysis code), RELAP5 (transient and accident analysis code), reactivity coefficient code (compute the effect on reactivity of changes in the core geometry, temperatures, materials, etc.), control rod (CR) worth, shutdown margins, CR depletion code (code that determines capabilities and limits of control rods and shutdown systems), REBUS (reactor fuel cycle codes), MCNPXT (Monte Carlo radiation interaction code), ORIGEN-S (codes to compute time-dependent concentrations of generated and depleted nuclides), among others.

The reactor core modeling system may include a Multiobjective Design Optimization (MDO) component to provide integration and automation of physics capabilities in the reactor core modeling system and enables MDO on advanced nuclear reactor design.

In one example, the MDO module may provide parameter sweeps. In conceptual and preliminary design, engineers produce a series of hypotheses aimed at improving product performance. The MDO module parameter sweep capabilities may provide a powerful tool for analyzing and evaluating such hypotheses. The user may specify (e.g., through input files and/or GUI inputs) bounds of a multidimensional region of interest in terms of dimensions, compositions, fuel management parameters, power level, or any other input. The reactor core modeling system, using the MDO module may then samples the design space and runs full and/or partial analysis at each point.

For a particular reactor design, such as the TWR reactor, the reactor core modeling system MDO module may compute the critical equilibrium fuel cycle (with couple fuel performance, etc.), generating reactivity coefficients, and running a set of design-basis or beyond design-basis transients. This systems-level degree of automation may be valuable when used in conjunction with a supercomputer.

In an additional or alternative example, the MDO module may provide an alternating conditional expectation analysis. As expected due to nuclear reactor complexity, reactor core modeling system simulations contain many independent and dependent variables. Accordingly, the reactor core modeling system may provide the Alternating Conditional Expectation (ACE) as a non-linear, non-parametric regression model for the parameter sweep results. ACE is a purely statistical model that is capable of teasing out dependencies that other forms of regression struggle with. Besides producing accurate and fast regression plant models for additional optimization, the intermediate transform functions of the independent variables provide the analysts with deep intuition about the shape and magnitude of, for example, how changes in duct thickness affect peak cladding temperature in a protected loss of flow accident versus changes in fuel height.

The reactor core modeling system may perform one ACE regression of each of the N dependent variables functions of M independent variables. Once built, this set of regressions represents a continuous surrogate of the parameter sweep, and any input combination of design inputs result instantly in a set of reactor performance metrics.

Visualization (User Interface) components 826 may include, for example, components that allow the user to view results of certain types of simulation data within the interface. For example, visualization components 826 may include, for example, 3D viewer and/or graphic analysis code), among others. It should be appreciated, however, that there are numerous codes and systems that can be used to simulate various reactor types and provide visualization of those analyses, and therefore any number and types of codes may be used.

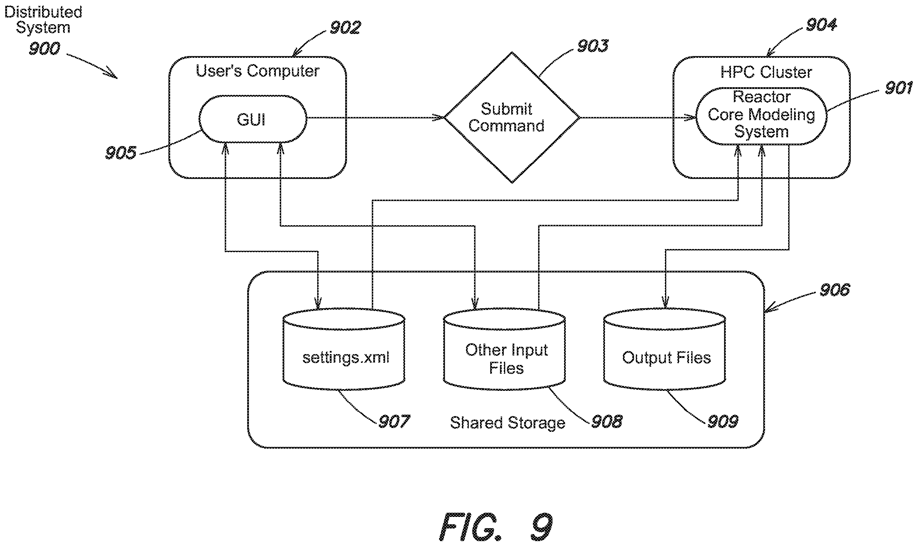

Figure 9 shows one implementation of a reactor core modeling system. For instance, the reactor core modeling system may function as a distributed computer system 900.

Some aspects of the design may be created using a user's computer operating a graphical user interface (GUI) (e.g., GUI 905), may submit one or more analyses to the reactor core modeling system (e.g., 901), that access one or more settings files (e.g., an XML-based settings file setting.xml 907), other input files (e.g., input files 908), and output files (e.g., output files 909). The user's computer may access one or more settings for a simulation via one or more controls presented to the user within the GUI. The reactor core modeling system 901 may execute on a cluster-based computer system (e.g., and HPC-based cluster, e.g., HPC cluster 904) capable of conducting multiple parallel executions. It should be appreciated that any number of computers and processors may be used, and data may be stored in one or more locations within the distributed system.

The cluster may include one or more virtual servers (not shown) supported by one or more physical nodes. Servers and/or objects may be instantiated responsive to the number of analyses needed to be performed. Each node may include one or more core processors, memory devices and storage, either physical and/or virtual.

The GUI may permit the user to define many settings, modify input files, and submit particular jobs (e.g., simulations) to the computer cluster. As shown in Figure 9, the GUI may read some of the input files modify them on shared storage, which is both readable by the GUI and the HPC cluster. To submit a job, a GUI "submit" command (e.g., 903) communicates with the cluster, which in turn executes components associated with the reactor core modeling system responsive to the submit command. The reactor core modeling system reads in the inputs from shared storage and begins the identified job. During the executed job, outputs are produced by the cluster on the shared storage where the user may analyze them.

For instance, there may be a selection within the GUI that permits the user to select the type of analysis performed and submit the job to the cluster on a predefined reactor model. There may be defined a number of predetermined analyses which may be selected by the user (e.g., in the interface).

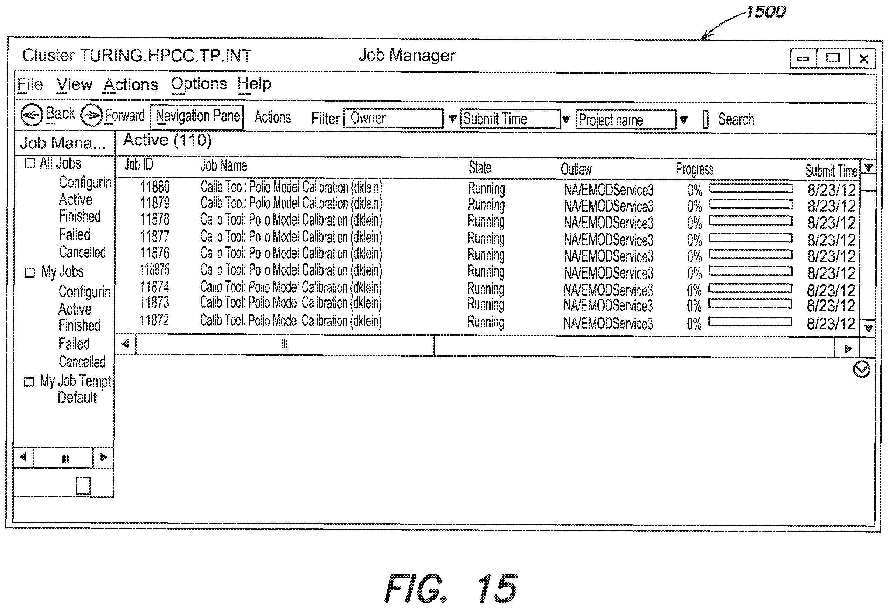

For instance, a user may desire to perform an analysis of the reactor over three (3) cycles and to analyze depletion. For instance, the interface may have a number of controls that allows the user to select the number of cycles and to select an active neutronics analyzer to perform the neutronics analysis. The interface may also include a control that submits the job to the cluster for simulation, after which the cluster produces a number of output files for analysis by the user. For instance, the output files may include any statuses, warnings, or errors and any other interesting results, such as k_{eff} and peak burnup. Information produced by the reactor core modeling system may be stored in a database (e.g., an SQL or HDF5 database) which can be accessed by one or more computer systems. Further, there may be some outputs that can be viewed directly such as by using a file viewer. Various example interfaces of the reactor core modeling system are discussed below with reference to Figs. 15-21.

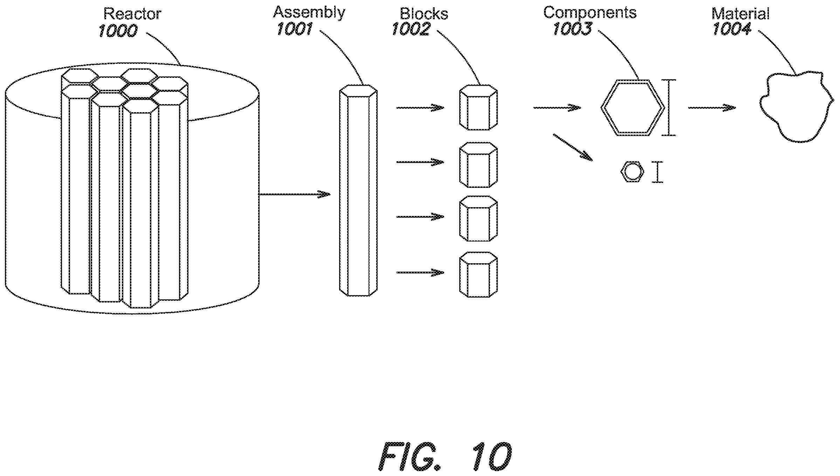

As discussed above, a common model of a reactor may be used by the reactor plant modeling system to perform modeling and simulation. Figure 10 shows an example hierarchical model architecture. For example, a reactor model 1000 may be composed of one or more assemblies (e.g., assembly 1001), which in turn are composed of one or more blocks (e.g., blocks 1002), which may be modeled as one or more axial slices of the assembly. Each block may include one or more components (e.g., components 1003, which may include fuel pins, cladding, and coolant), each of which may comprise one or more materials (e.g., material 1004) which carry temperature and composition-dependent properties.

A consistent and programmatically-accessible material properties database may be useful for the integrated reactor design. Material objects may be created with various correlations embedded for thermo-mechanical properties: mass density, thermal expansion coefficients, heat capacity, viscosity, thermal conductivity, Young's modulus, yield strength, etc. Physics modules that in the past may have queried for sodium properties at the current temperature may in some cases query for coolant properties. Thus, with a single line change to the input, the module that was computing the sodium density coefficient of reactivity instantly computes the lead density coefficient of reactivity, though the required design changes for such a coolant swap are not currently automated. A feature to automatically evaluate the ranges of the correlations and print them to a report for offsite use is also valuable.

Different solvers may contain different geometry approximations. To enable coupling between modules with incompatible geometries, a geometry conversion and modification modules may be implemented in the reactor modeling system. The converter modules perform automated mass-conserving transformations, reducing the possibility of manual conversion errors. For example, the converter modules may convert 3-D hex cases into equivalent R-Z or R-Z-θ models (e.g. for high energy resolution, low spatial-resolution simulations capturing some transport effects).

Because the reactor may be modeled in a hierarchical manner, modeling and analysis can be broken down into constituent parts, and modeling and analysis is simplified. Further, when minor changes are made with respect to a particular part, only small changes need to be made with the overall design. Further, because a model can be easily instantiated with multiple configurations, such a model may be centrally stored and accessed for use with multiple simulations and any code specific character is removed to standardize the reactor model and the information modeling it, allowing the data to be accessed globally.

The reactor object may be the core object and include all other reactor-based objects. An assembly object may represent each of the individual assemblies that are within the reactor (e.g., a fuel assembly) and are contained by the reactor object. A block object represents divisions of the assembly object into parts, and therefore may be contained by the assembly object. For instance, the blocks may be smaller portions of the assembly into blocks that are assembled to make up the assembly. A component object may include geometrically defined objects (e.g., circles, hexagons, helices, dodecagons, etc.) and their dimensions. The component objects may be contained by the block object. In turn, component objects may contain material objects which are used to define the material properties of the material, including, but not limited to linear expansion coefficients, thermal conductivities, isotopic mass fractions, densities, among other characteristics relating to the material.

These objects may also house other object types, and it should be appreciated that various aspects could include other object relations and types. Further, it should be appreciated that these objects may contain and store state information, such as the reactor's overall k_{eff}, flux, height, temperature, among other information.

The interface stack is a list of adapter objects that connect physics and bookkeeping modules to the Reactor Model. It defines and calls several action trigger methods on each item in the stack in order. The individual adapters implement which trigger methods are appropriate to activate their actions (e.g., BoL, Beginning of cycle, every time node, end of cycle, end of life). The specific content of the stack varies depending on the desire parameters of the engineering evaluation at hand. Ordering is set by physical interdependencies (e.g., between thermal power production and required coolant flow), however, in many coupled physics problems the proper ordering is ill-defined.

The interface stack allows, for example, a module for microscopic depletion to be swapped out for a different module with higher fidelity or an independent methodology, or even increasing or decreasing the frequency to which the module is called to adjust the desire fidelity and/or run time expense. When the interaction triggers are implemented, the other physics module will work with the new module without modification. Such swaps are frequently performed for sensitivity studies, independent verification, major upgrades, and for problems outside of a module's domain.

Additionally or alternatively, selected modules may be triggered at different time or event criteria. For example, some modules, such as flux and depletion solvers may be called at each small time step, modules that run fuel performance coupling or control motion may be called at each larger time step, and modules that perform regression analysis or uncertainty quantification may be called only at end of fuel cycle, fuel movements, or other appropriate events. Various degrees of physics coupling can be modeled by performing inner loops at each time node over selected tightly-coupled modules. Items in the interface stack may be dynamically enabled or disabled at runtime, which may allow, for example, detailed analysis to occur only at certain timesteps of particular interest.

The reactor core modeling system may use an object to control the flow of information and code, synchronizing various components necessary to perform the simulation. For example, a managerial object (e.g., referred herein as an "operator" object) may instantiate the reactor object to establish it at a baseline state (BOL state "beginning of life"). Once created, a neutronics state may be input (e.g., manually by identifying a file, inputting a neutronics state from a database, etc.). The state may represent the state of the reactor at any given point in time. In one embodiment, the state of the reactor may include at least some actual data collected from a working reactor.

Each level of the data model may include scalar values such as parameters. The reactor core modeling system may also include tools to navigate the data model, view and/or change parameters, and perform other functions. To this end, the reactor core modeling system may include one or more interfaces (e.g., graphical, command line, API, etc.) that permits a user to interact with the data model. Notable, some of these interfaces may provide the ability to see performance information at the various levels (e.g., reactor, assembly, block, component, etc.) and view, report, perform calculations, or other functions based on any one of them. In this manner, having a common reactor format that permits cooperation between multiple modules is beneficial, as calculations can be performed based on a common reactor model. Information stored within the model may be used to communicate information between disparate functions that are necessary to perform the reactor analyses.

Further, because there is a common model that describes the reactor, a common view may be created for the reactor over time. For instance, the database may be configured to store historical information regarding the reactor state, changes, etc. that may be viewed, saved, simulated, over time. For instance, it may be helpful to load or recall a previous reactor state (e.g., a simulated and/or actual state) for the purposes of performing analyses, design changes, evaluating parameters such as temperature, power, etc.

As discussed above, there are many considerations that need to occur for analyzing the operation of a nuclear reactor. Because of this, there are many different systems and codes that analyze different aspects of a nuclear reactor. There may be an ability within the reactor core modeling system to selectively control different simulations and what components are called to perform such simulations. For example, there may be a number of external codes/interfaces that can be accessed by the system as discussed above with reference to Figure 8B.

The reactor core modeling system may also have a number of internal modules and components that are used to perform additional analyses. For example, there may be components provided that perform:
Thermodynamics analysis and subchannel analysis with orificing
Provide and maintain material libraries and thermal expansion analysis
Advanced fuel management functions
Reactivity coefficients and control rod worth
Fast equilibrium cycle search
Multiobjective design optimization
Parallelized depletion
Burnup-dependent microscopic cross sections
Economics analysis
History tracking and summaries
Variational and λ-eigenmode expansion perturbation theory
Pin flux reconstruction
Sensitivities and uncertainty quantification
Intrinsic source calculations
Database storage (e.g., SQL, HDF5)

Because certain systems only perform certain portions of the analyses required to design and simulate a nuclear reactor, a system may be provided that performs all aspects of the design, and integrates the analyses using a common reactor model. Such a system may also include components that combine analyses according to specific sequences. Also, certain analyses or combinations of the analyses may be standardized and presented to the user as a simulation option within an interface of the reactor core modeling system (e.g., within a GUI presented to a user). Therefore, because modeling and simulation tasks are organized, sequenced and performed through a common reactor object model and database describing that model, an improved and more efficient method is provided for modeling and simulating such systems.

It is appreciated that certain modules may be called within a certain order. For instance, the following is an example order by which certain modules may be called:
1. Fuel manager (to move fuel assemblies to different locations)
2. Depletion module to update number densities
3. MC2 to update cross sections
4. DIF3D to compute power and flux distributions
5. COBRA to update temperature and pressure distributions
6. An intrinsic source module to compute the intrinsic neutron source
7. An economics module to compute fuel cycle costs
8. A summarizer module to produce a summary (e.g., as a human-readable output)
9. A database module to persist the output to a database (e.g., an SQL database)

In such an example simulation, the module MC2 is executed first, followed by the DIF3D module, the COBRA module, etc. The modules to be executed may be governed by the reactor core modeling system by implementing an interface stack that defines an order of the executed modules.

The reactor core modeling system may provide many different options for the user, such as for executing simulations through a GUI, command line option, etc. Further, the interface may permit the user to view the status of the execution of various modules and see the results of the execution within a single interface.

There may be multiple options for different executions that relate to a reactor simulation, such as for example, running an orificed case, running a reactivity coefficient case, running a standard reactivity coefficient case, running control rod worth curves, computing a shutdown margin, running a transient case, among others. Such operations, their orders of execution, dependencies, etc. may be stored on different operator object types and instantiated by the user when needed.

The reactor core modeling system may include one or more interfaces that provide communication to one or more portions of code and/or external systems. For instance, certain code may be called that performs one or more parts of the analyses. When using some types of interfaces, there needs to be certain information provided or calculated beforehand. For instance, when using a SASSYS module, a reactor database must exist that includes neutronics and thermal hydraulic information. Some information (such as neutronics) may be provided by an analyst (e.g., a neutronics analyst) or other program. However, once reactivity coefficients are determined, a safety analysis can be executed. In some cases, it would be beneficial to calculate reactivity coefficients prior to performing the safety analysis. Such sequence information and any data dependencies may be maintained by the reactor core modeling system.

Certain modules may apply certain other constructs to perform calculations. For instance, certain objects (e.g., fuel assemblies) may be grouped into other organizing structures, such as rings or types of fuel assemblies. In one embodiment, a control may be provided that permits the user to organize certain reactor objects into groups. The control may be provided that allows fuel assemblies to be grouped based on fuel types (e.g., feed fuel, and her driver, outer driver, LTA, etc.) which can be used, for example, in reactivity coefficients calculation and SASSYS core channels. In one example implementation, the reactor core modeling system may have functionality that inspects assembly objects and categorizes various fuel assembly types.

In one example, a SASSYS case can be executed by the reactor core modeling system with a given reactor database, performing the analysis using the following sequence:
1. Examine the reactor database (e.g., with a viewer module) to determine if the database has reactivity coefficients calculated. This step could be performed automatically by the reactor core modeling system. If there exist no reactivity coefficients, the system may call a module that calculates reactivity coefficients.
2. Load the database including the reactivity coefficients, and create a new output database for the safety analysis, and create one or more SASSYS cases.
3. Perform a safety transient analysis.

Other analyses may be performed, depending on the user selections and the modules selected, however, it should be appreciated that such analyses are performed more efficiently by using a common object model which can be translated between internal and external modules that perform any requisite analyses.

The reactor core modeling system may include a component that performs multi-objective optimization. Such an optimization is helpful in evaluating parameterized cases for the branch search. In particular, a sweep of runs may be executed by the reactor core modeling system, each with a different set of independent input variables. The reactor core modeling system executes these cases and builds a collection of corresponding dependent variables such as, for example, discharge burnup, cycle length, Peak Cladding Temperature (PCT), and transient performance. Relationships between inputs and outputs may be complicated, but a regression algorithm may permit the information to be more understandable to a user. After an appropriate regression model is constructed, a physical programming optimization paradigm, or other multi-objective optimization approach may be used to determine exactly which set of independent variables is optimal. In one embodiment, it is appreciated that the optimal set may most likely not be the one that was executed in the training of the model, but rather one between the points based on a regression analysis. Such optimal sets may be returned to the user by the reactor core modeling system as an output. Such types of analyses are helpful when evaluating possible reactor changes, and to optimize certain variables (e.g., reactivity swing).

It should be appreciated that any number and type of parameter may be optimized. Further, it should be appreciated that other types of analyses such as mechanical, pressure, fuel handling among others can be determined and/or optimized.

The reactor core modeling system may include a component that performs functions relating to a fuel handler. For instance, as discussed above, the reactor core modeling system may include a number of functions that relate to making fuel changes within the reactor model. For instance, as discussed above, the reactor core modeling system may include a function that swaps fuel assemblies. In the context of the reactor object, given to assembly objects, the method switches their locations within the core.

In another function, there may be a discharge swap function that swaps a fuel assembly within the core with an external assembly. Another function may be provided that swaps a list of assemblies in a daisy chain type of operation such as those that might be required in a convergent shuffling and/or convergent-divergent shuffling. For example, using a list of assemblies, the first one is placed in the last ones position and all others shift accordingly. Other functions may be provided that determines which assemblies are suitable for shuffling, such that they can be candidates for a shuffling function. For instance, a function may be provided that locates an assembly in the reactor that has a maximum burnup closest to a particular percentage (e.g., 20%). In this way, a user may more easily locate possible assemblies to be swapped. Some other parameters function may include, for example, a function that returns assemblies closest to a particular ring, a parameter having a certain value (e.g., a certain assembly level parameter), certain minimum or maximum values, any exclusions, any locations within the core that are excluded or included, or other parameters.

The reactor core modeling system may include a branch search calculator wherein a number of fuel management operations are performed in parallel and a preferred one is chosen and proceeded with. In particular, the branch search calculator may compute some type of score that assesses whether or not particular fuel assembly should be moved. For example, such a calculator may include calling a function that chooses particular fuel modules to be swapped. In one embodiment, there may be particular keys that can be used to perform the branch search. For instance, the search can optimize on the first key first, and then perform a second pass using the second key, holding the optimal first value constant, until all keys are evaluated. In one embodiment, a best search result from the branch search may be determined by comparing k_{eff} values with a target K setting (e.g., selectable by a user within the GUI). It should be appreciated that any number and types of keys may be used.

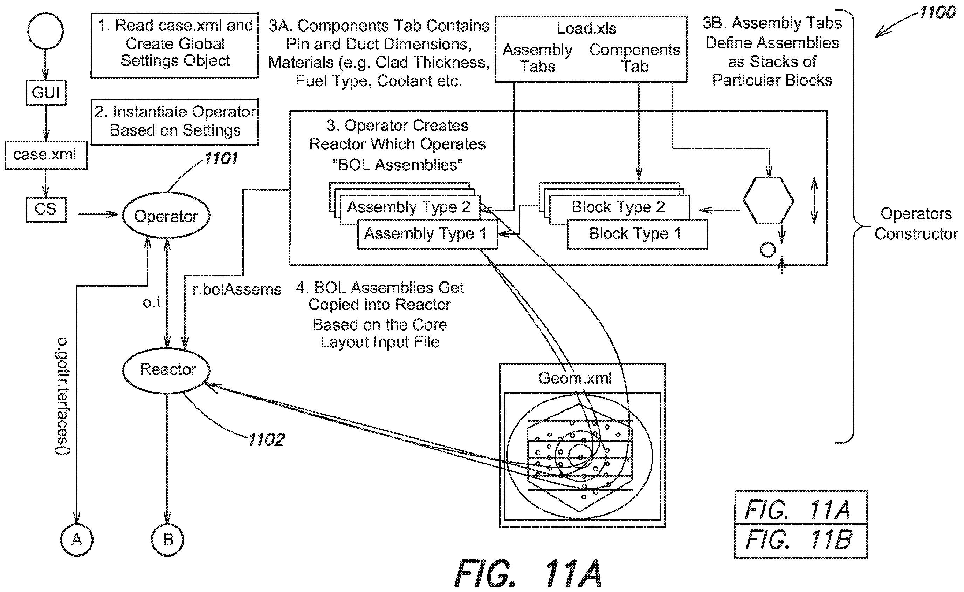

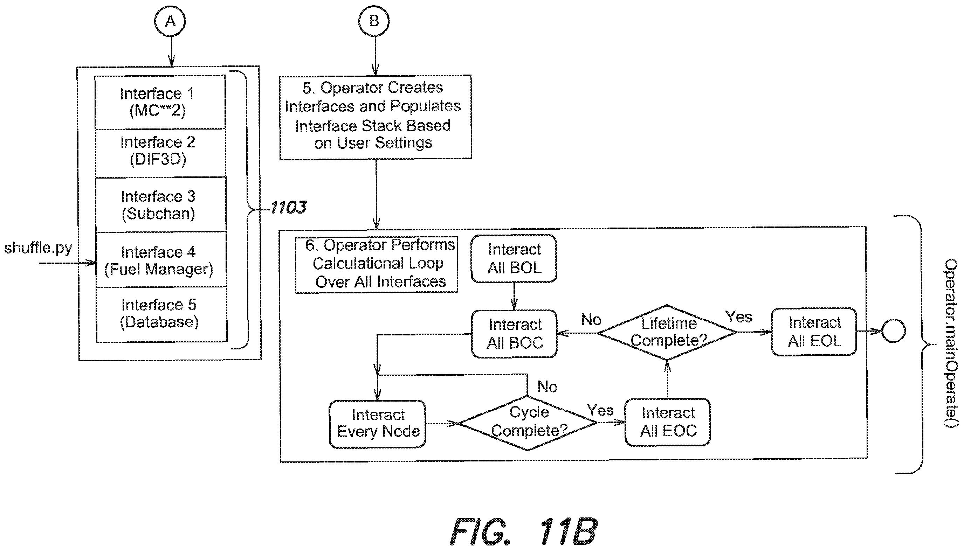

Figures 11A - 11B show one example process 1100 for performing an analysis of a reactor core. For instance, the user may through a GUI define a case to be executed (e.g., as stored within a case.XML file), the case specifying one or more settings associated with the execution.

As discussed above, a global operator object 1101 that overlooks the execution sequence may be instantiated. For instance, several actions may occur including reading a global settings input file and instantiating the reactor object 1102 that represents the reactor to be analyzed (e.g., steps 1, 2). The user may design the reactor through a GUI (e.g., through tabs in the user interface, steps 3A, 3B), and the reactor object may be saved within some storage location (e.g., shared storage). Loading and geometry input files may be processed (e.g., by the operator object, at step 3) and the reactor object may be populated with assemblies that are defined by the user through the GUI. Based on a core layout input file, assemblies may be copied into a reactor object (e.g., at step 4). Any interfaces may be instantiated and attached to the operator object by a create interfaces method call (e.g., at step 5).

Depending on what interfaces need to be called, the operator calls each of the interfaces in a sequential manner from beginning of life (BOL) through one or more cycles (e.g., at step 6). Notably, particular interfaces are called in a particular order depending on which data is needed for a subsequent execution of an interface. For instance, as shown, one or more interfaces 1103 may be called in a particular order. Once complete, any outputs and indications to the user (e.g., via the GUI) may be performed. Further, any information associated with a run may be persisted to a database.

For runs over specific time steps, a user may request certain snapshots of a previous run (e.g., as recalled from a historical database) and review performance parameters over a particular timeframe. There may be particular operator objects that correspond to particular types of analyses (e.g., a safety - related operator that only produces reactivity coefficients at a single point in time). Further, operator objects according to one embodiment, may be tasked with copping the state of a master reactor to all other processors in a parallel run. This may be performed, for example, in order to optimize a particular parameter or set of parameters.

When functionality that can be performed by an operator is a branch search. This functionality, for example, may run multiple possible fuel management options in parallel and select one that is preferred by the user prior to proceeding to a next time step as discussed in more detail above.

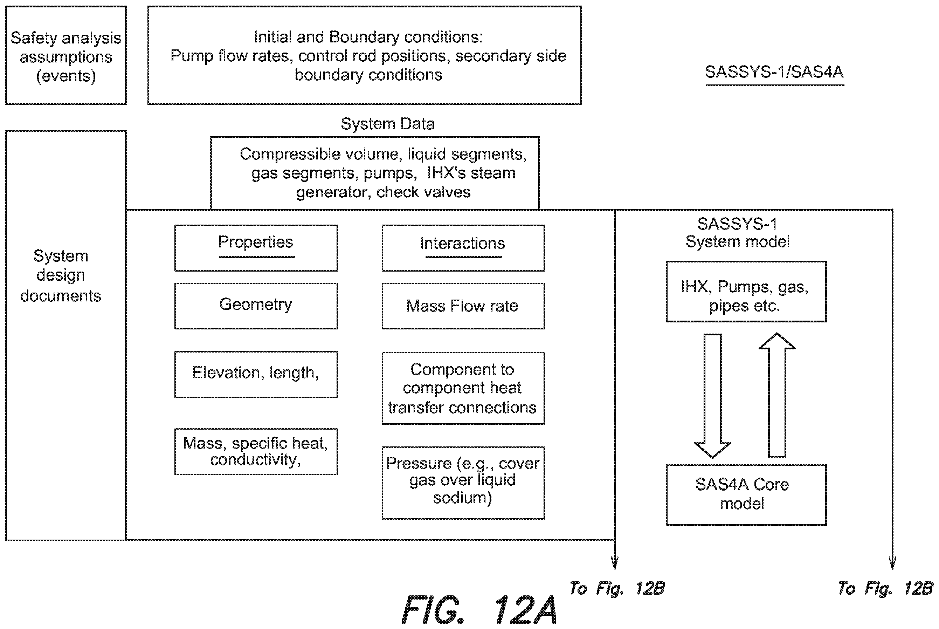

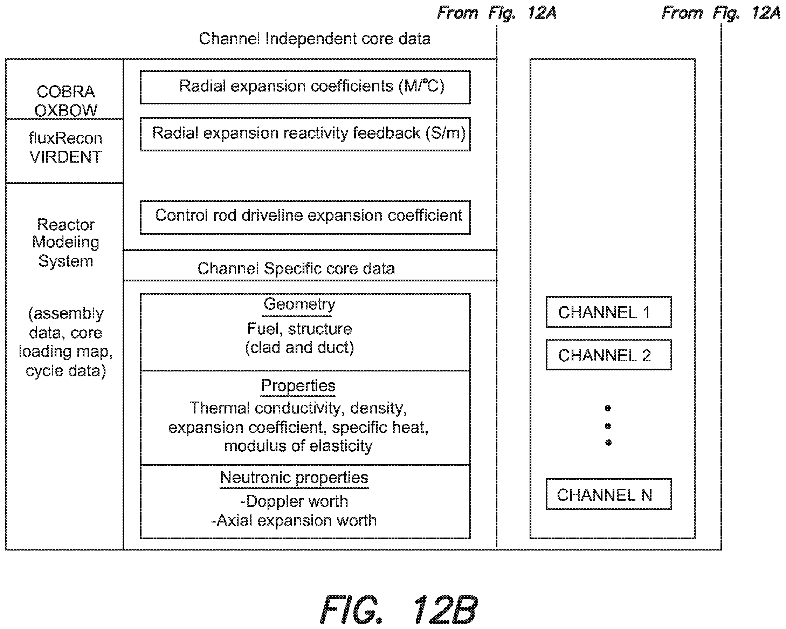

FIGS. 12A-12B show one implementation of a reactor core modeling system according to one embodiment. For instance, as shown in FIGS. 12A-12B, an example model may be created that performs an analysis of a particular reactor core design. In particular, given some initial and boundary conditions (e.g., as defined by the user through one or more interfaces) such as pump flow rates, rot control positions, secondary side boundary conditions, among others, and system design documents that define system data, properties of the reactor, and any interactions, the information is submitted to one or more simulation components and calculated for various portions of the core.

For example, system data may include for instance, compressible volume liquid segments, gas segments, pumps, steam generators, check valves, etc. properties of particular elements may include geometry, elevation, length, mass, specific heat, conductivity, among others. Interactions that may be simulated include mass flow rate, component two component heat transfer connections, pressure (e.g., cover gas over liquid sodium), among other calculations. The reactor modeling system maintains system design, state, and conditions, and provides information between particular called modules.

The reactor core modeling system may determine channel independent core data which relate to general reactor core operating data such as retail expansion coefficients, radial expansion reactivity feedback, control rod drive expansion coefficients, etc. For particular channels 1-N, the reactor modeling system computes channel specific coordinator for various elements using information such as geometry, properties, and neutronic properties of particular core elements. Such core elements may be represented and described in a data structure as discussed above with reference to Figure 10. The reactor modeling system may call certain components (e.g., COBRA, OXBOW, fluxRecon, VIRDENT) using particular sequences and using certain simulation parameters, while maintaining the core state and transient data.

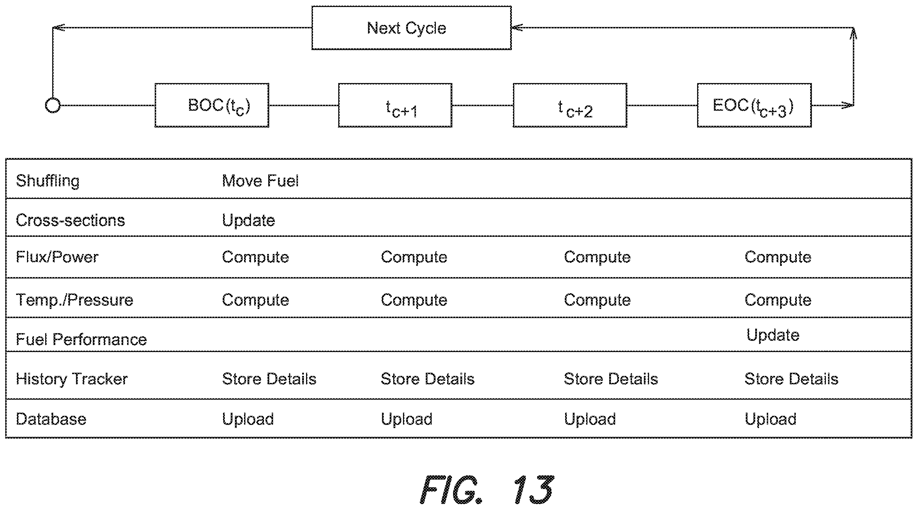

FIG. 13 shows one example implementation of an interface stack according to one embodiment that shows an example execution of various simulation components as a function of time. For example, at a particular fuel cycle, there is a beginning of cycle (BOC) at time t_{c} and an end of cycle (EOC) at time t_{c+3}. There are intermediate computation times t_{c+1} and t_{c+2} within the cycle. In the example above where fuel assemblies are shuffled at a refueling cycle, the reactor core modeling system modifies the reactor model responsive to the fuel assembly move operation, and at time t_{c} updates the cross sections. The reactor core modeling system then calls certain components to simulate operation of the modified core over the time period, and calls particular components at certain sequences and frequencies. In the example shown, the reactor core modeling system performs a flux/power calculation, temperature/pressure calculation, history tracker (store detailed information), and uploads the database. At a next point in time t_{c+1}, the reactor core modeling system may only perform flux/power calculation, temperature/pressure calculation, history tracker (store detailed information), and uploads the database operation without updating any cross section data (e.g., the core configuration did not change). At other time periods, certain other functions may be performed (e.g., fuel performance may be determined at the end of a fuel cycle). In this way, the reactor core modeling system may control the simulation, update and store state and historical information, and modify the core model based on user changes.

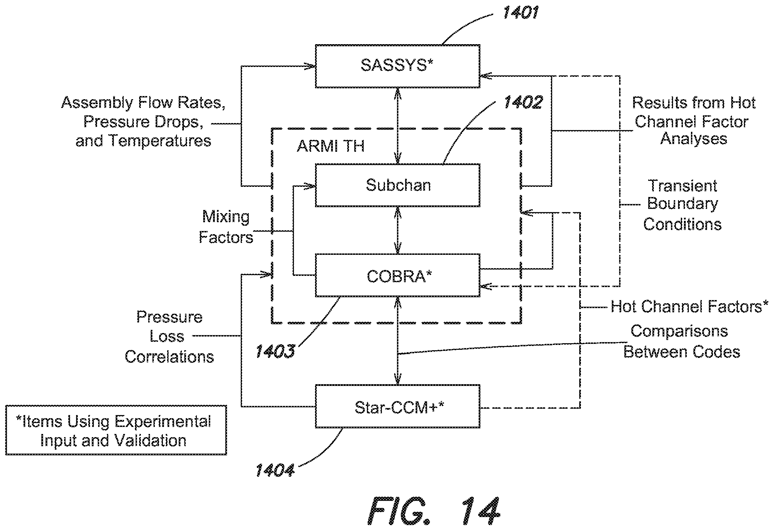

FIG. 14 shows one example of interactions between simulation components. It is appreciated that certain interactions between elements may be permitted to occur and facilitated by the reactor core modeling system. As shown, a SASSYS component 1401 may receive assembly flow rates, pressure drops and temperatures that are fed back from the reactor core modeling system and other components. The SASSYS component may also receive results from hot channel factor analyses. The reactor core modeling system may include, within its thermal/hydraulics module (TH) a SUBCHAN component 1402 and a COBRA component 1403. As discussed above, the TH module may calculate transients (e.g., COBRA (transient and steady state subchannel analysis code) and SUBCHAN (simple, fast steady-state subchannel analysis module)) and feed that information to other modules such as SASSYS. Similarly, there may be another component (e.g., Star-CCM+ component 1404) that provides pressure loss calculation data to the TH module. There may also be coordination within modules (e.g., such as TH) such as mixing factor information or any other simulation data flow. Although some of the data may be produced that is a direct result of a simulation, some data may be derived using experimental input and validation. In this way, the reactor core modeling system may control a certain simulation process and provide requisite data between modules,

Figures 15-21 show various graphical user interfaces that may be used to configure, monitor and control a reactor core modeling system.

FIG. 15 shows one example user interface 1500 of a reactor core modeling system. In particular, interface 1500 shows a status window that indicates the status of multiple simulations that may be executing in parallel on multiple processors (e.g., a cluster of nodes including multiple processors). For instance, such an interface may be used to monitor simulation performance relating to fuel assembly moves within a reactor core.

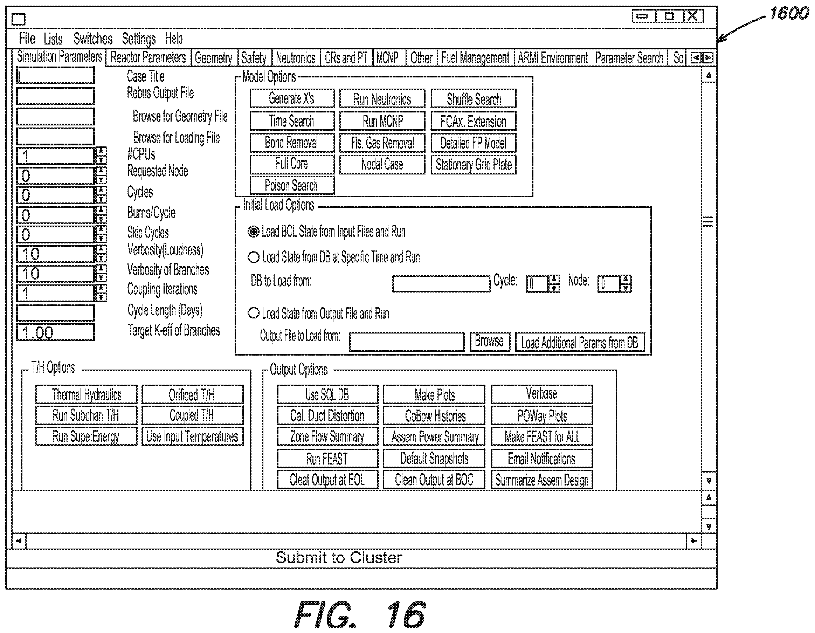

FIG. 16 shows one example user interface 1600 including simulation parameters and associated controls. For example, interface 1600 may include one or more windows (e.g., tabs) through which the user may control various aspects of the simulation. For instance, in one user interface, the user may adjust simulation parameters including locations of particular files, number of CPUs upon which the simulation can execute, the number of cycles including burn and skip cycles, information relating to models, thermal/hydraulic options, output options, and any boundary parameters and initial load options, among other simulation parameter settings and controls. Interface 1600 may also have a number of other tabs associated with other specific parameters and controls related to the simulation and control of individual simulation components. For instance, there may be controls associated with reactor parameters, geometry, safety, neutronics, control rods, fuel management, among other aspects.

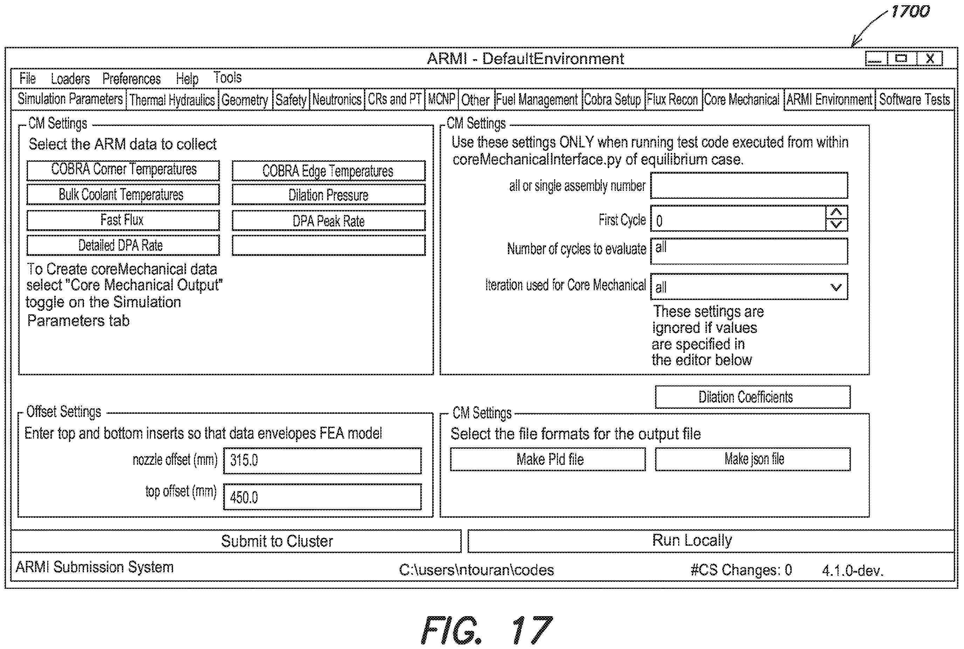

FIG. 17 shows another example interface 1700 that shows core mechanical parameter settings and controls. For example, there may be one or more settings and controls that identify which types of reactor control data to collect and provide as output. Further, the user may selectively control which fuel assemblies to monitor, number of cycles to evaluate, number of iterations to perform, among other settings. There may also be other controls that initiate the running of particular simulations. The interface may also include controls that allow user to submit the simulation to a system (e.g., a cluster) or execute the simulation locally (e.g., on a user computer).

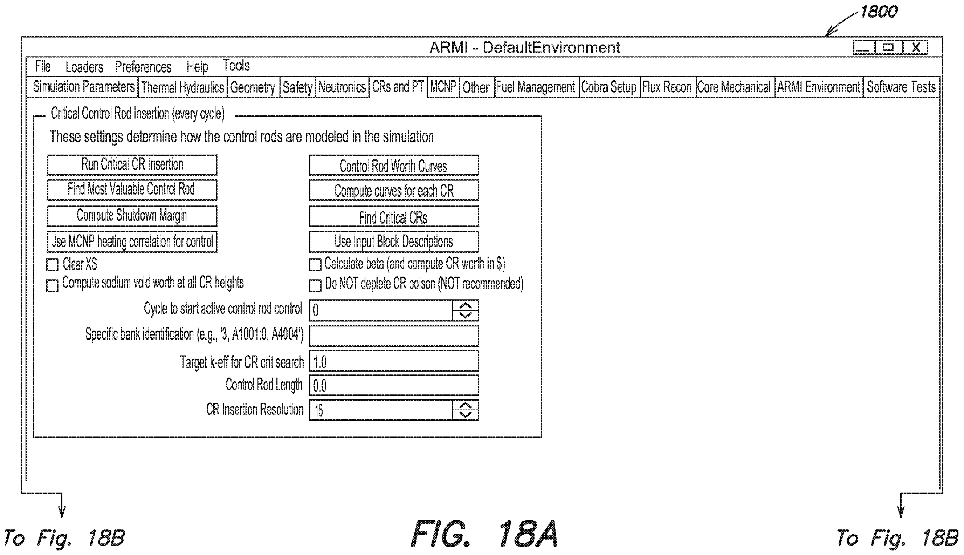

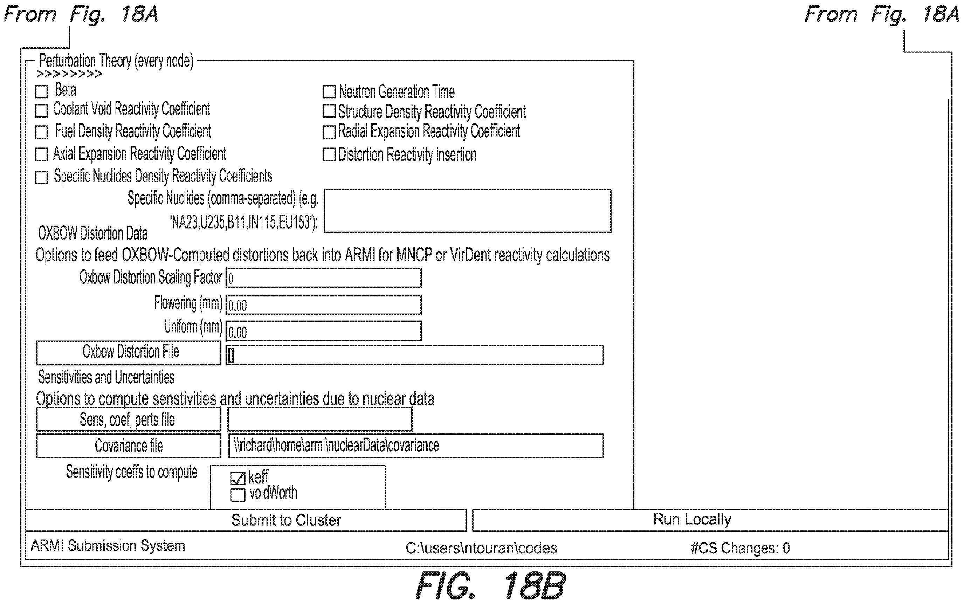

FIGS. 18A-18B show an example interface 1800 including parameter and simulation control settings related to control rods. For example, there may be an interface that allows a user to control the settings that determine how control rods are modeled within the simulation. Thus, the system may simulate various changes in control rod position, among other control rod settings. In this interface, the user may also select certain parameters to monitor that relate to control rods such as physical distortion of control rods and various reactivity coefficients. The interface may also control which outputs of the simulation to save and provide to the user.

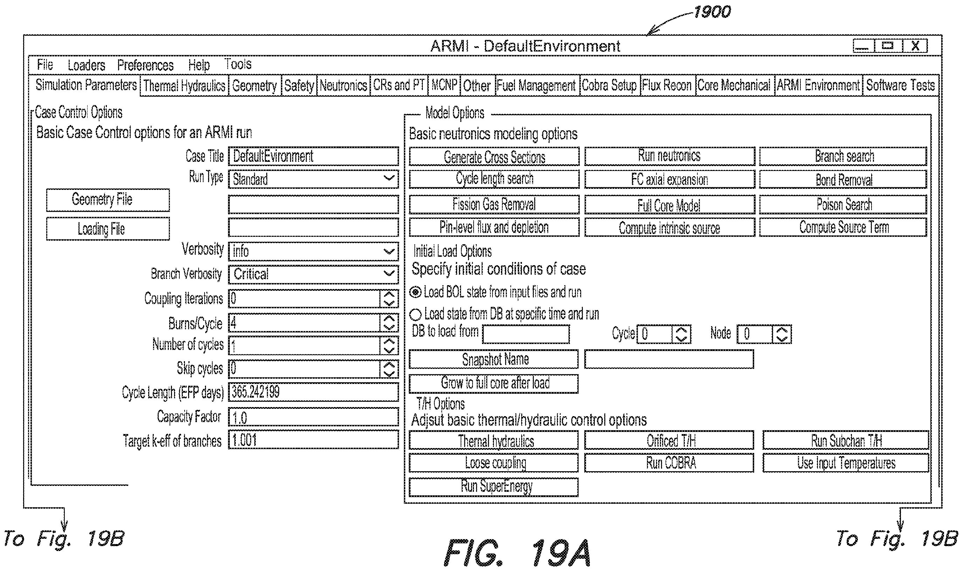

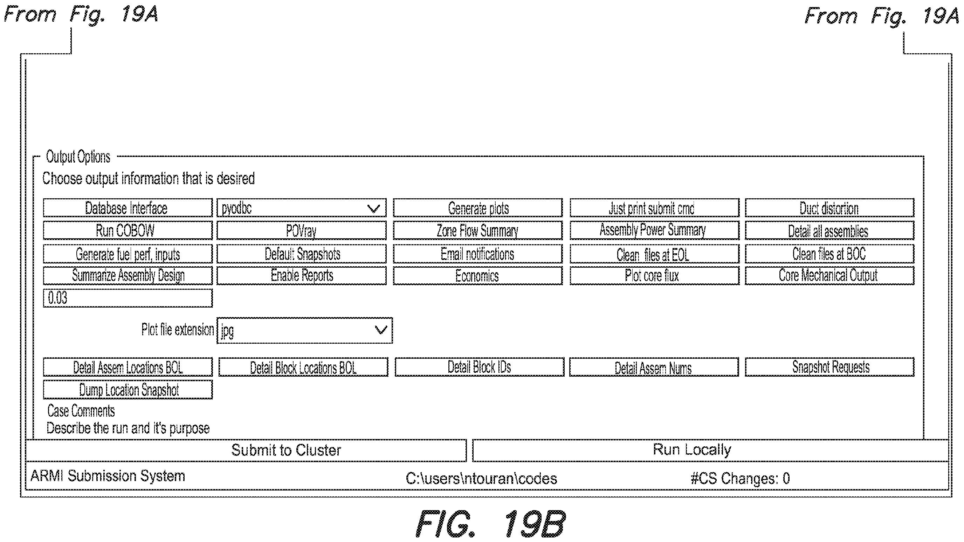

FIGS. 19A-19B show another example user interface 1900 including simulation parameters and associated controls. In particular, interface 1900 include similar parameters and controls similar to that shown in Figure 16. However, interface 1900 may include additional model options including determining pin level flux and depletion, computing intrinsic source, and other components options. As components and functions are added, the interface is easily extended to incorporate any additional functionality.

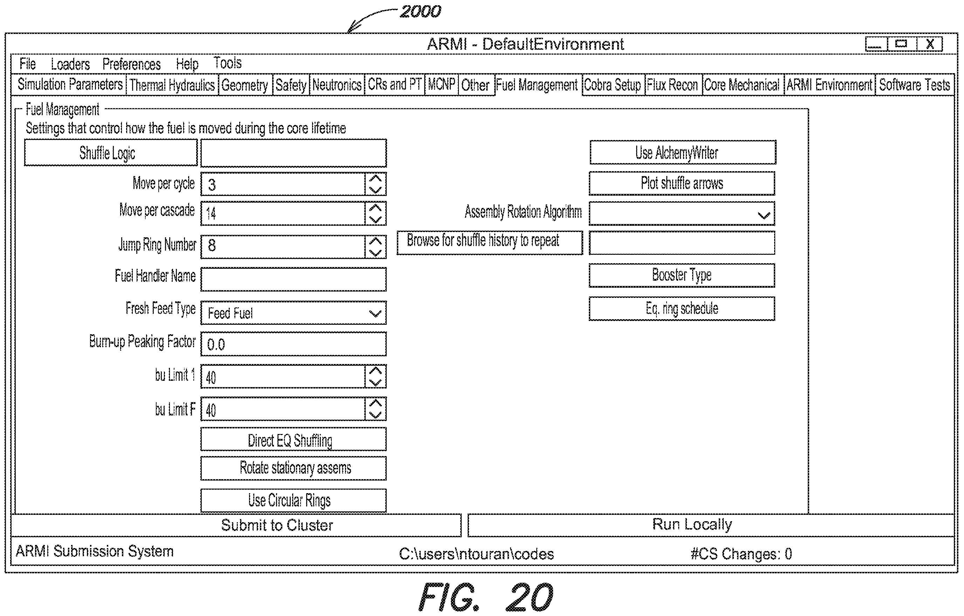

FIG. 20 shows an example interface 2000 including parameter and simulation control settings related to fuel management. The system may include an interface that permits a user to model different scenarios relating to fuel shuffling within the core. In particular, the fuel management interface may include settings that control how the fuel is moved during the core lifetime. There may be for example, controls that permit the user to adjust parameters such as move per cycle, move per cascade, adjusting of a jump ring number, the type of fresh feed fuel, particular burn up parameters such as burn up limits and peaking factors, among other settings.

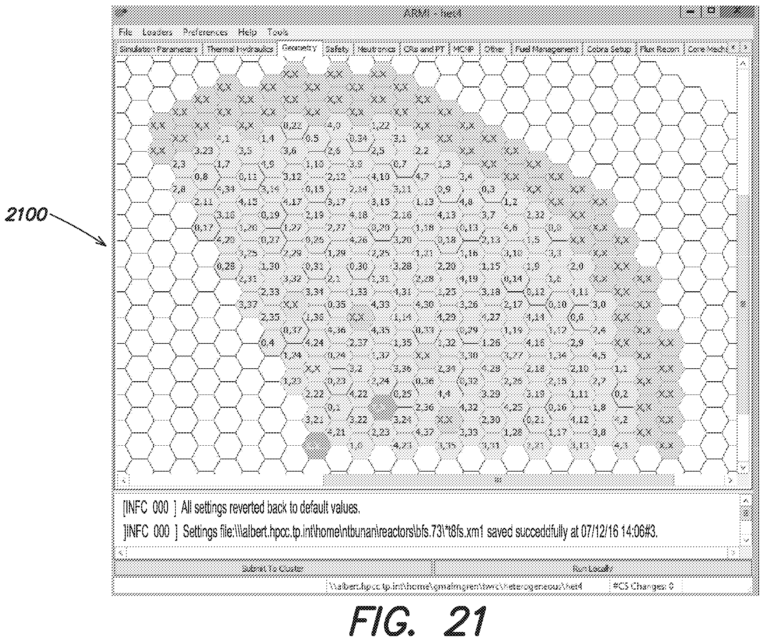

FIG. 21 shows an example interface 2100 that depicts core geometry including simulation parameters. For example, figure 2100 include an interface that depicts the geometry of the reactor fuel assemblies in two-dimensional space. Interface 2100 may superimpose one or more parameters of interest within the depiction to permit the user to actively observe particular fuel assemblies and the parameters. It is appreciated that any number and type of parameter associated with the fuel assembly may be selected and displayed by the user within the user interface.

### Example Computer System

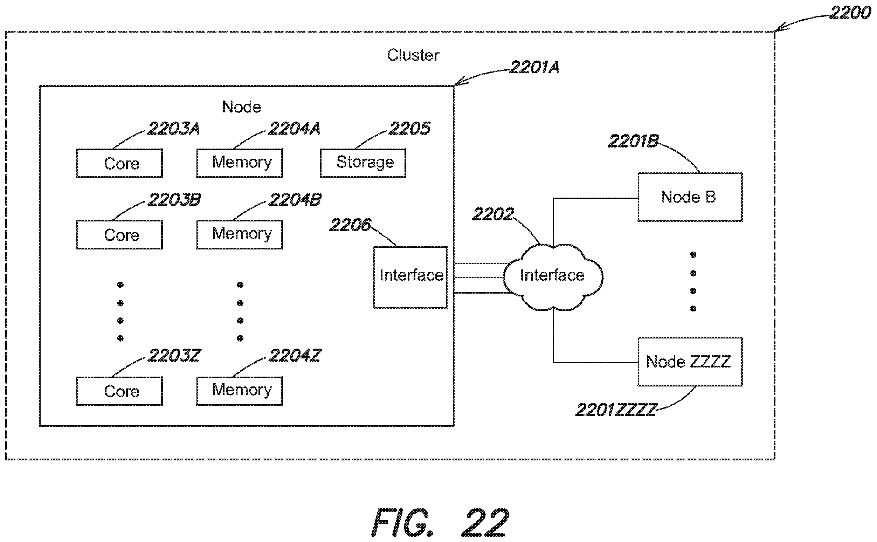

Figure 22 shows a distributed system 2200 that may be used. As discussed, a cluster-based system comprising a number of nodes may be used to perform modeling and simulation of a nuclear plant. For instance, a cluster 2200 may be used, cluster 2200 comprising a number of nodes (e.g., nodes 2200A-2201ZZZZ), each having one or more core processors (e.g., core processors 2203A-2203Z), one or more memory devices (e.g., me or devices 2204A-2204Z), one or more storage devices (e.g., storage device 2205), and one or more network interfaces (e.g., interface 2206).

Nodes 2200A-2200ZZZZ may be coupled by a network 2202 which may comprise one or more communication elements such as physical connections and/or active systems such as switches, routers, or similar systems. Each node may execute an operating system (e.g., the Windows or Linux operating system) along with a cluster operating system (e.g., an HPC cluster). Nodes may be connected via a network such as InfiniBand, Gigabit Ethernet, or other network type or combination thereof.

User applications executing on the core processors may employ message passing modules (e.g., the Messaging Passing Interface (MPI) to use multiple cores across nodes for parallel execution. Nodes may also include specialized processors (e.g., Graphics Processing Units), that enable one or more specialized software to achieve high performance. The cluster may use some nodes for specialized tasks, such as, for example, performing user account functions, performing workload management permitting nodes to share cluster resources, database server functions (e.g., SQL), input/output functions, execute user interfaces, among other functions. It should be appreciated that other cluster-based, processors, memories, storage systems (e.g., Hadoop) or interface types may be used.

Having thus described several aspects of at least one embodiment, it is to be appreciated various alterations, modifications, and improvements will readily occur to those skilled in the art. Such alterations, modifications, and improvements are intended to be part of this disclosure, and are intended to be within the scope of the invention as defined by the claims. Accordingly, the foregoing description and drawings are by way of example only.

For example, the system may be used to store historical information relating to the core such as tracking physical distortions of fuel assemblies. The system may be used to perform other functions such as reviewing insertion and withdraw loads. Also, if enough is known regarding the fuel assembly history, the system can simulate composition to take in assemblies that have been compositionally modified or brought in from other reactors.

Further, it should be appreciated that because the modeling system can include actual measured parameters from an operating reactor, calculations of the results of a branch search move can be compared to actual results, and the models used to create a modeled reactor can be adjusted to be more accurate. In other embodiments, particular parameters may be optimized to have different effects, such as, for example optimizing fuel moves for maintaining reactivity within acceptable limits, or above a critical threshold.

## Claims

1. A computer-implemented method (200) for analyzing nuclear reactor data comprising acts of:
receiving, from one or more sensors associated with an operating nuclear reactor, data indicative of an operating condition of the reactor;
determining (204), by a reactor core modeling system (101) that is adapted to model a nuclear reactor (1000) having a core including a plurality of fuel assemblies (1001) and based at least in part of the operating condition of the nuclear reactor, a plurality of fuel moves for certain groups of the plurality of fuel assemblies within the core, wherein the act of determining the plurality of fuel moves comprises acts of:
determining (205), by the reactor core modeling system for a plurality of fuel cycles of the nuclear reactor, a plurality of possible group moves, each possible group move of the plurality of group moves associated with at least one fuel cycle of the plurality of fuel cycles; and
determining (210) an optimal group move for the at least one fuel cycle by
determining (206) whether one or more predefined limits associated with the reactor are exceeded for each possible group move;
removing (207) any possible group move from the plurality of group moves when one or more predefined limits are determined to be exceeded; and
determining (208), for each possible group move remaining in the plurality of possible group moves, a score associated with the possible group move;
determining, by the reactor core modeling system, an optimal sequence of group moves from the remaining plurality of possible group moves, wherein each sequence of group moves has a time separation between the group moves over multiple fuel cycles; and
moving, based at least in part on the optimal group move for the cycle, one or more fuel assemblies within the core.

2. The method according to claim 1, wherein at least one of the plurality of group moves comprises moving, within the same fuel cycle of the plurality of fuel cycles, a plurality of fuel assemblies within the core.

3. The method according to claim 1 or claim 2, wherein the optimal group move achieves an optimal burnup of fuel over the at least one fuel cycle.

4. The method according to any one of the preceding claims, wherein determining the optimal sequence of group moves achieves an optimal burnup of fuel within the core over the optimal sequence of group moves.

5. The method according to claim 4, wherein determining, by the reactor core modeling system, the optimal sequence of group moves includes performing, by the reactor core modeling system, a branch search that evaluates an outcome of selected reactor plant parameters responsive to the plurality of possible group moves.

6. The method according to claim 4 or claim 5, wherein performing the branch search further comprises evaluating the plurality of group moves responsive to a simulation of the nuclear reactor for each of the plurality of group moves, for example wherein evaluating the plurality of group moves responsive to the simulation of the nuclear reactor for each group move of the plurality of group moves further comprises evaluating values of the selected reactor plant parameters, for example determining whether the values of the selected reactor plant parameters are within acceptable limits or determining a score based on the values of the selected reactor plant parameters.

7. The method according to any one of claims 4 to 6, wherein determining an optimal sequence of group moves from the plurality of possible group moves further comprises either:
determining at least one sequence of group moves that achieves optimal burn within the core while maintaining criticality within the core;
determining at least one sequence of group moves that maintains criticality within the core.

8. The method according to any one of claims 4 to 7, wherein the reactor core modeling system is coupled to the nuclear reactor and is operable to receive one or more operating parameters of the nuclear reactor, and wherein determining the optimal sequence of group moves from the plurality of possible group moves is determined responsive to the one or more operating parameters of the nuclear reactor.

9. The method according to any one of claims 4 to 8, wherein the reactor core modeling system includes a branch search calculator operable to perform the determining the plurality of fuel moves for certain groups of the plurality of fuel assemblies within the core.

10. The method according to claim 9, wherein the branch search calculator includes an interface, and further comprises receiving, by the branch search calculator, one or more inputs that restrict the act of searching for the optimal sequence of group moves.

11. The method according to claim 10, wherein the branch search calculator determines one or more outputs, for example wherein the one or more outputs includes either:
at least one of a group comprising a reactivity change within the core over a move cycle, and an indication that identifies in-core moves of the certain groups of the plurality of fuel assemblies within the core; or
at least one of a group comprising:
a first indication identifying a location to which a fuel assembly should be moved;
a second indication of criticality of the core;
a pressure drop across the fuel assembly;
a power change in the fuel assembly during a cycle;
a third indication of cooling for the fuel assembly;
a fourth indication of a number of moves for a particular cycle;
a fifth indication of a chain of moves for the particular cycle;
a sixth indication of k∞ for the fuel assembly; and
a seventh indication of reactivity swing over the particular cycle.

12. The method according to claim 10 or 11, wherein the one or more inputs includes at least one of a group comprising:
a first indication of an acceptable limit to reactivity swing over a particular cycle;
physical limits associated with a fuel assembly; and
a second indication of an acceptable power change in the fuel assembly.

13. The method according to any one of the preceding claims, wherein determining the plurality of fuel moves for certain groups of the plurality of fuel assemblies within the core further comprises determining a placement of the certain groups within the core prior to a refueling operation, for example determining a plurality of possible cascading fuel moves up to the refueling operation, for example without removal of fuel assemblies from the core.

14. The method according to any one of the preceding claims, further comprising determining, by the reactor core modeling system for the plurality of fuel cycles of the nuclear reactor, the plurality of possible group moves based at least in part on one or more specific types of fuel, for example wherein at least one of the one or more specific types of fuel includes at least one of a feed type of fuel or a driver type of fuel, and further comprising determining, by the reactor core modeling system for the plurality of fuel cycles of the nuclear reactor, the plurality of possible group moves based on the at least one of the feed type of fuel or the driver type of fuel and a current location of a standing wave within the nuclear reactor.

15. The method according to any one of claims 4 to 12, wherein determining, by the reactor core modeling system, the optimal sequence of group moves from the plurality of possible group moves further comprises determining, by the reactor core modeling system, an optimal burnup of fuel within the core over the sequence based on one or more reactor parameters, the one or more reactor parameters including one or more parameters from a group comprising:
burn-up history;
burn-up limit;
temperature history;
coolant flow;
coolant flow history;
desired power distribution;
reactivity;
reactivity feedback;
temperature;
neutronics;
fuel performance;
burn up;
reactivity;
power production;
residence time;
fuel wastage;
design limits of structures;
safety limits of structures;
poisons;
criticality level; and
location of a standing wave.

## Patentansprüche

1. Computerimplementiertes Verfahren (200) zum Analysieren von Kernreaktordaten, das die folgenden Schritte umfasst:
Empfangen von Daten, die eine Betriebsbedingung des Reaktors anzeigen, von einem oder mehreren Sensoren, die einem in Betrieb befindlichen Kernreaktor zugeordnet sind;
Bestimmen (204) mehrerer Brennstoffbewegungen für bestimmte Gruppen der mehreren Brennelemente in dem Kern durch ein Reaktorkern-Modellierungssystem (101), das dafür ausgelegt ist, einen Kernreaktor (1000) zu modellieren, der einen Kern aufweist, der mehrere Brennelemente (1001) enthält, und zumindest teilweise basierend auf der Betriebsbedingung des Kernreaktors, wobei der Schritt des Bestimmens der mehreren Brennstoffbewegungen die folgenden Schritte umfasst:
Bestimmen (205) mehrerer möglicher Gruppenbewegungen für mehrere Brennstoffzyklen des Kernreaktors durch das Reaktorkern-Modelliersystem, wobei jede mögliche Gruppenbewegung der mehreren Gruppenbewegungen mindestens einem Brennstoffzyklus der mehreren Brennstoffzyklen zugeordnet ist; und
Bestimmen (210) einer optimalen Gruppenbewegung für den mindestens einen Brennstoffzyklus durch
Bestimmen (206), ob eine oder mehrere vordefinierte Grenzen, die dem Reaktor zugeordnet sind, für jede mögliche Gruppenbewegung überschritten werden;
Löschen (207) einer möglichen Gruppenbewegung aus den mehreren Gruppenbewegungen, wenn bestimmt worden ist, dass eine oder mehrere vordefinierte Grenzen überschritten worden sind; und
Bestimmen (208) für jede mögliche Gruppenbewegung, die in den mehreren möglichen Gruppenbewegungen verbleibt, einer Wertung, die der möglichen Gruppenbewegung zugeordnet ist;
Bestimmen durch das Reaktorkern-Modellierungssystem einer optimalen Sequenz von Gruppenbewegungen aus den verbleibenden mehreren möglichen Gruppenbewegungen, wobei jede Sequenz von Gruppenbewegungen eine zeitliche Trennung zwischen den Gruppenbewegungen über mehrere Brennstoffzyklen aufweist; und
Bewegen, zumindest teilweise basierend auf der optimalen Gruppenbewegung für den Zyklus, eines oder mehrerer Brennelemente in dem Kern.

2. Verfahren nach Anspruch 1, wobei mindestens eine der mehreren Gruppenbewegungen das Bewegen, in demselben Brennstoffzyklus der mehreren Brennstoffzyklen, mehrerer Brennelemente in dem Kern umfasst.

3. Verfahren nach Anspruch 1 oder 2, wobei die optimale Gruppenbewegung einen optimalen Abbrand des Brennstoffs über den mindestens einen Brennstoffzyklus erzielt.

4. Verfahren nach einem der vorhergehenden Ansprüche, wobei das Bestimmen der optimalen Sequenz von Gruppenbewegungen einen optimalen Abbrand des Brennstoffs in dem Kern über die optimale Sequenz von Gruppenbewegungen erzielt.

5. Verfahren nach Anspruch 4, wobei das Bestimmen der optimalen Sequenz von Gruppenbewegungen durch das Reaktorkern-Modellierungssystem das Durchführen durch das Reaktorkern-Modellierungssystem einer Verzweigungssuche enthält, die ein Resultat der ausgewählten Reaktoranlagenparameter bewertet, die auf die mehreren möglichen Gruppenbewegungen reagieren.

6. Verfahren nach Anspruch 4 oder Anspruch 5, wobei das Durchführen der Verzweigungssuche ferner das Bewerten der mehreren Gruppenbewegungen, die auf eine Simulation des Kernreaktors reagieren, für jede der mehreren Gruppenbewegungen umfasst, wobei beispielsweise das Bewerten der mehreren Gruppenbewegungen, die auf die Simulation des Kernreaktors reagieren, für jede Gruppenbewegung der mehreren Gruppenbewegungen ferner das Bewerten von Werten der ausgewählten Reaktoranlagenparameter, z. B. das Bestimmen, ob die Werte der ausgewählten Reaktoranlagenparameter innerhalb akzeptabler Grenzen liegen, oder das Bestimmen einer Wertung basierend auf den Werten der ausgewählten Reaktoranlagenparameter umfasst.

7. Verfahren nach einem der Ansprüche 4 bis 6, wobei das Bestimmen einer optimalen Sequenz von Gruppenbewegungen aus den mehreren möglichen Gruppenbewegungen ferner Folgendes umfasst:
Bestimmen mindestens einer Sequenz von Gruppenbewegungen, die optimalen Abbrand in dem Kern erzielen, während die Kritikalität innerhalb des Kerns aufrechterhalten wird;
Bestimmen mindestens einer Sequenz von Gruppenbewegungen, die die Kritikalität innerhalb des Kerns aufrechterhält.

8. Verfahren nach einem der Ansprüche 4 bis 7, wobei das Reaktorkern-Modellierungssystem an den Kernreaktor gekoppelt ist und betrieben werden kann, um einen oder mehrere Betriebsparameter des Kernreaktors zu empfangen, und wobei das Bestimmen der optimalen Sequenz von Gruppenbewegungen aus den mehreren möglichen Gruppenbewegungen in Reaktion auf den einen oder die mehreren Betriebsparameter des Kernreaktors bestimmt wird.

9. Verfahren nach einem der Ansprüche 4 bis 8, wobei das Reaktorkern-Modellierungssystem einen Verzweigungssuche-Rechner enthält, der betrieben werden kann, um das Bestimmen der mehreren Brennstoffbewegungen für bestimmte Gruppen der mehreren Brennelemente in dem Kern durchzuführen.

10. Verfahren nach Anspruch 9, wobei der Verzweigungssuche-Rechner eine Schnittstelle enthält und das Verfahren ferner das Empfangen einer oder mehrerer Eingaben durch den Verzweigungssuche-Rechner, die den Schritt des Suchens nach der optimalen Sequenz von Gruppenbewegungen einschränken, umfasst.

11. Verfahren nach Anspruch 10, wobei der Verzweigungssuche-Rechner eine oder mehrere Ausgaben bestimmt, wobei beispielsweise die eine oder mehreren Ausgaben ferner Folgendes umfassen:
mindestens eine aus einer Gruppe, die eine Reaktivitätsänderung in dem Kern über einen Bewegungszyklus hinweg und eine Anzeige, die Bewegungen innerhalb des Kerns der bestimmten Gruppen der mehreren Brennelemente innerhalb des Kerns identifiziert, umfasst; oder
mindestens eine aus einer Gruppe, die Folgendes umfasst:
eine erste Anzeige, die einen Ort identifiziert, zu dem ein Brennelement bewegt werden soll;
eine zweite Anzeige der Kritikalität des Kerns;
einen Druckabfall über dem Brennelement;
eine Leistungsänderung in dem Brennelement während eines Zyklus;
eine dritte Anzeige der Kühlung des Brennelements;
eine vierte Anzeige einer Zahl von Bewegungen für einen bestimmten Zyklus;
eine fünfte Anzeige einer Kette von Bewegungen für den bestimmten Zyklus;
eine sechste Anzeige von k∞ für das Brennelement; und
eine siebte Anzeige der Reaktivitätsschwankung über dem bestimmten Zyklus.

12. Verfahren nach Anspruch 10 oder 11, wobei die eine oder die mehreren Eingaben mindestens eine einer Gruppe umfasst, die Folgendes umfasst:
eine ersten Anzeige einer akzeptablen Grenze für eine Reaktivitätsschwankung über einen bestimmen Zyklus;
physikalische Grenzen, die einem Brennelement zugeordnet sind; und
eine zweite Anzeige einer akzeptablen Leistungsänderung in dem Brennelement.

13. Verfahren nach einem der vorhergehenden Ansprüche, wobei das Bestimmen der mehreren Brennstoffbewegungen für bestimmte Gruppen der mehreren Brennelemente in dem Kern ferner das Bestimmen einer Positionierung der bestimmten Gruppen in dem Kern vor einem Brennelementwechselbetrieb umfasst, z. B. Bestimmen mehrerer möglicher kaskadierender Brennstoffbewegungen bis zu dem Brennelementwechselbetrieb, z. B. ohne Entfernen von Brennelementen aus dem Kern.

14. Verfahren nach einem der vorhergehenden Ansprüche, das ferner Folgendes umfasst: Bestimmen der mehreren möglichen Gruppenbewegungen durch das Reaktorkern-Modellierungssystem für die mehreren Brennstoffzyklen des Kernreaktors zumindest teilweise basierend auf einem oder mehreren spezifischen Typen von Brennstoff, wobei z. B. mindestens einer des einen oder der mehreren Typen von Brennstoff einen Zufuhrtyp des Brennstoffs oder einen Antriebstyp des Brennstoffs enthält, und Bestimmen der mehreren möglichen Gruppenbewegungen durch das Reaktorkern-Modellierungssystem für die mehreren Brennstoffzyklen des Kernreaktors basierend auf dem Zufuhrtyp des Brennstoffs und/oder dem Antriebstyp des Brennstoffs und einem aktuellen Ort einer stehenden Welle in dem Kernreaktor.

15. Verfahren nach einem der Ansprüche 4 bis 12, wobei das Bestimmen der optimalen Sequenz von Gruppenbewegungen aus den mehreren möglichen Gruppenbewegungen durch das Reaktorkern-Modellierungssystem ferner das Bestimmen eines optimalen Abbrands des Brennstoffs in dem Kern über die Sequenz durch das Reaktorkern-Modellierungssystem basierend auf einem oder mehreren Reaktorparametern umfasst, wobei der eine oder die mehreren Reaktorparameter einen oder mehrere Parameter aus einer Gruppe enthalten, die Folgendes enthält:
Abbrandverlauf;
Abbrandgrenze;
Temperaturverlauf
Kühlmittelfluss;
Kühlmittelflussverlauf;
gewünschte Leistungsverteilung;
Reaktivität;
Reaktivitätsrückkopplung;
Temperatur;
Neutronik;
Brennstoffleistung;
Abbrand;
Reaktivität;
Leistungserzeugung;
Verweilzeit;
Brennstoffverbrauch;
Auslegungsgrenzen von Strukturen;
Sicherheitsgrenzen von Strukturen;
Gifte;
Kritikalitätsniveau; und
Ort einer stehenden Welle.

## Revendications

1. Procédé (200), mis en œuvre par ordinateur, d'analyse de données de réacteur nucléaire comprenant les étapes suivantes :
réception, depuis un ou plusieurs capteurs associés à un réacteur nucléaire en fonctionnement, de données indiquant une condition de fonctionnement du réacteur ;
détermination (204), par un système de modélisation de coeur de réacteur (101) qui est adapté à modéliser un réacteur nucléaire (1000) pourvu d'un coeur comportant une pluralité d'assemblages de combustible (1001) et sur la base au moins en partie de la condition de fonctionnement du réacteur nucléaire, d'une pluralité de déplacements de combustible pour certains groupes de la pluralité d'assemblages de combustible au sein du coeur, l'étape de détermination de la pluralité de déplacements de combustible comprenant les étapes suivantes :
détermination (205), par le système de modélisation de coeur de réacteur pour une pluralité de cycles de combustible du réacteur nucléaire, d'une pluralité de déplacements de groupe possibles, chaque déplacement de groupe possible de la pluralité de déplacements de groupe étant associé à au moins un cycle de combustible de la pluralité de cycles de combustible ; et
détermination (210) d'un déplacement de groupe optimal pour l'au moins un cycle de combustible par
détermination (206) si une ou plusieurs limites prédéfinies associées au réacteur sont dépassées pour chaque déplacement de groupe possible ;
élimination (207) de tout déplacement de groupe possible de la pluralité de déplacements de groupe en cas de détermination qu'une ou plusieurs limites prédéfinies sont dépassées ; et
détermination (208), pour chaque déplacement de groupe possible restant dans la pluralité de déplacements de groupe possibles, d'un score associé au déplacement de groupe possible ;
détermination, par le système de modélisation de coeur de réacteur, d'une séquence optimale de déplacements de groupe à partir de la pluralité restante de déplacements de groupe possibles, chaque séquence de déplacements de groupe ayant une séparation temporelle entre les déplacements de groupe sur des cycles de combustible multiples ; et
déplacement, sur la base au moins en partie du déplacement de groupe optimal pour le cycle, d'un ou de plusieurs assemblages de combustible au sein du coeur.

2. Procédé selon la revendication 1, dans lequel au moins un de la pluralité de déplacements de groupe comprend le déplacement, au sein du même cycle de combustible de la pluralité de cycles de combustible, d'une pluralité d'assemblages de combustible au sein du coeur.

3. Procédé selon la revendication 1 ou la revendication 2, dans lequel le déplacement de groupe optimal permet d'obtenir une combustion massique optimale de combustible sur l'au moins un cycle de combustible.

4. Procédé selon l'une quelconque des revendications précédentes, dans lequel la détermination de la séquence optimale de déplacements de groupe permet d'obtenir une combustion massique optimale de combustible au sein du coeur sur la séquence optimale de déplacements de groupe.

5. Procédé selon la revendication 4, dans lequel la détermination, par le système de modélisation de coeur de réacteur, de la séquence optimale de déplacements de groupe comporte la réalisation, par le système de modélisation de coeur de réacteur, d'une recherche par branches qui évalue une issue de paramètres de centrale à réacteur sélectionnés en réponse à la pluralité de déplacements de groupe possibles.

6. Procédé selon la revendication 4 ou la revendication 5, dans lequel la réalisation de la recherche par branches comprend en outre l'évaluation de la pluralité de déplacements de groupe en réponse à une simulation du réacteur nucléaire pour chacun de la pluralité de déplacements de groupe, par exemple dans lequel l'évaluation de la pluralité de déplacements de groupe en réponse à la simulation du réacteur nucléaire pour chaque déplacement de groupe de la pluralité de déplacements de groupe comprend en outre l'évaluation de valeurs des paramètres de centrale à réacteur sélectionnés, par exemple la détermination si les valeurs des paramètres de centrale à réacteur sélectionnés s'inscrivent dans des limites acceptables ou la détermination d'un score sur la base des valeurs des paramètres de centrale à réacteur sélectionnés.

7. Procédé selon l'une quelconque des revendications 4 à 6, dans lequel la détermination d'une séquence optimale de déplacements de groupe à partir de la pluralité de déplacements de groupe possibles comprend en outre soit :
la détermination d'au moins une séquence de déplacements de groupe qui permet d'obtenir une combustion optimale au sein du coeur tout en maintenant la criticité au sein du coeur ; soit
la détermination d'au moins une séquence de déplacements de groupe qui maintient la criticité au sein du coeur.

8. Procédé selon l'une quelconque des revendications 4 à 7, dans lequel le système de modélisation de coeur de réacteur est couplé au réacteur nucléaire et est apte à recevoir un ou plusieurs paramètres de fonctionnement du réacteur nucléaire, et dans lequel la détermination de la séquence optimale de déplacements de groupe à partir de la pluralité de déplacements de groupe possibles est déterminée en réponse aux un ou plusieurs paramètres de fonctionnement du réacteur nucléaire.

9. Procédé selon l'une quelconque des revendications 4 à 8, dans lequel le système de modélisation de coeur de réacteur comporte un calculateur de recherche par branches apte à réaliser la détermination de la pluralité de déplacements de combustible pour certains groupes de la pluralité d'assemblages de combustible au sein du coeur.

10. Procédé selon la revendication 9, dans lequel le calculateur de recherche par branches comporte une interface, et comprenant en outre la réception, par le calculateur de recherche par branches, d'une ou de plusieurs entrées qui limitent l'étape de recherche de la séquence optimale de déplacements de groupe.

11. Procédé selon la revendication 10, dans lequel le calculateur de recherche par branches détermine une ou plusieurs sorties, par exemple dans lequel les une ou plusieurs sorties comportent soit :
au moins un élément dans un groupe comprenant une variation de réactivité au sein du coeur sur un cycle de déplacements, et une indication qui identifie des déplacements dans le coeur de certains groupes de la pluralité d'assemblages de combustible au sein du coeur ; soit
au moins un élément dans un groupe comprenant :
une première indication identifiant un emplacement jusqu'auquel un assemblage de combustible doit être déplacé ;
une deuxième indication de criticité du coeur ;
une chute de pression à travers l'assemblage de combustible ;
une variation de puissance dans l'assemblage de combustible au cours d'un cycle ;
une troisième indication de refroidissement pour l'assemblage de combustible ;
une quatrième indication d'un nombre de déplacements pour un cycle particulier ;
une cinquième indication d'une chaîne de déplacements pour le cycle particulier ;
une sixième indication de koo pour l'assemblage de combustible ; et
une septième indication de perte de réactivité sur le cycle particulier.

12. Procédé selon la revendication 10 ou 11, dans lequel les une ou plusieurs entrées comportent au moins un élément dans un groupe comprenant :
une première indication d'une limite acceptable à la perte de réactivité sur un cycle particulier ;
des limites physiques associées à un assemblage de combustible ; et
une deuxième indication d'une variation de puissance acceptable dans l'assemblage de combustible.

13. Procédé selon l'une quelconque des revendications précédentes, dans lequel la détermination de la pluralité de déplacements de combustible pour certains groupes de la pluralité d'assemblages de combustible au sein du coeur comprend en outre la détermination d'un placement des certains groupes au sein du coeur préalablement à une opération de rechargement, par exemple la détermination d'une pluralité de déplacements de combustible en cascade possibles jusqu'à l'opération de rechargement, par exemple sans retrait d'assemblages de combustible du coeur.

14. Procédé selon l'une quelconque des revendications précédentes, comprenant en outre la détermination, par le système de modélisation de coeur de réacteur pour la pluralité de cycles de combustible du réacteur nucléaire, de la pluralité de déplacements de groupe possibles sur la base au moins en partie d'un ou de plusieurs types spécifiques de combustible, par exemple dans lequel au moins un des un ou plusieurs types spécifiques de combustible comporte au moins un type parmi un type de combustible d'alimentation et un type de combustible nourricier, et comprenant en outre la détermination, par le système de modélisation de coeur de réacteur pour la pluralité de cycles de combustible du réacteur nucléaire, de la pluralité de déplacements de groupe possibles sur la base de l'au moins un type parmi le type de combustible d'alimentation et le type de combustible nourricier et d'un emplacement actuel d'une onde stationnaire au sein du réacteur nucléaire.

15. Procédé selon l'une quelconque des revendications 4 à 12, dans lequel la détermination, par le système de modélisation de coeur de réacteur, de la séquence optimale de déplacements de groupe à partir de la pluralité de déplacements de groupe possibles comprend en outre la détermination, par le système de modélisation de coeur de réacteur, d'une combustion massique optimale au sein du coeur sur la séquence sur la base d'un ou de plusieurs paramètres de réacteur, les un ou plusieurs paramètres de réacteur comportant un ou plusieurs paramètres dans un groupe comprenant :
un historique de combustion massique ;
une limite de combustion massique ;
un historique de température ;
un débit de caloporteur ;
un historique de débit de caloporteur ;
une distribution de puissance souhaitée ;
une réactivité ;
une contre-réaction de réactivité ;
une température ;
la neutronique ;
une performance de combustible ;
une combustion massique ;
une réactivité ;
une production de puissance ;
un temps de séjour ;
un gaspillage de combustible ;
des limites théoriques de structures ;
des limites de sécurité de structures ;
des poisons ;
un niveau de criticité ; et
un emplacement d'une onde stationnaire.
